(19) Europäisches Patentamt
European Patent Office
Office européen des brevets

(11) **EP 3 866 072 A1**

(12) **EUROPEAN PATENT APPLICATION**

(43) Date of publication:
**18.08.2021 Bulletin 2021/33**

(51) Int Cl.:
*G06N 3/08* (2006.01)   *G06N 20/10* (2019.01)

(21) Application number: **20157023.1**

(22) Date of filing: **12.02.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Experian Limited
NG2 Business Park
Nottingham
NG80 1ZZ (GB)**

(72) Inventors:
• **HICKEY, James
London, EC2N 4AY (GB)**

• **DI STEFANO, Pietro
London, EC2N 4AY (GB)**
• **JONES, Gareth
London, EC2N 4AY (GB)**
• **STODDART, Laura
London, EC2N 4AY (GB)**
• **VASILEIOU, Vlasios
London, EC2N 4AY (GB)**
• **ZABALA, Francisco Javier Campos
London, EC2N 4AY (GB)**

(74) Representative: **Barnfather, Karl Jon
Withers & Rogers LLP
4 More London Riverside
London SE1 2AU (GB)**

(54) **SYSTEM AND METHOD FOR TRAINING A MACHINE LEARNING MODEL**

(57)    A system for training a machine learning model, the system comprising a data input unit configured to receive a training data set comprising a plurality of data points and a plurality of targets associated therewith, wherein a subset of the plurality of data points include a protected characteristic; a training unit operable to update a current model configuration of the machine learning model. The training unit comprising a prediction unit configured to receive the training data set as input and output a plurality of predicted scores based on the current model configuration of the machine learning model; and an optimisation unit configured to receive the plurality of predicted scores and subsequently determine an updated model configuration of the machine learning model. The system further comprising a control unit configured to constrain operation of the training unit based at least in part on an estimated relationship between the plurality of predicted scores and the protected characteristic such that the influence of the protected characteristic in a subsequent model configuration of the machine learning model is substantially mitigated.

Figure 1

**Description**

**FIELD OF INVENTION**

The present disclosure relates to systems and methods for training a machine learning model. Specifically, but not exclusively, the present disclosure relates to a system for training a machine learning model on training data, a subset of which include a protected characteristic. Specifically, but not exclusively, the present disclosure relates to a system for iteratively training a machine learning model whereby the training process is adapted at each step in order to mitigate the influence of a protected characteristic on the machine learning model.

**BACKGROUND**

Training a machine learning model typically comprises using known gradient based optimisation approaches to search for a configuration of the machine learning model which is optimal with respect to a carefully chosen objective function. For example, stochastic gradient descent and backpropagation can be used to determine an optimal configuration of a feed-forward neural network with respect to a differentiable objective function such as cross-entropy.

The data used to train a machine learning model is referred to as the training data, or training data set. For the supervised learning paradigm, the training data set comprises a number of data points each having a known label. For classification, the label is a categorical value; for regression, the label is a real value. Once trained, the machine learning model provides a score, or probability value, for a data point not included in the training data. For classification tasks, this score, or probability value, is then used to determine a predicted target. Alternatively, the machine learning algorithm directly provides the predicted target.

In some instances, the training data may further comprise inherent properties which affect the training of the machine learning model. For example, a subset of the data points within the training data may include a characteristic which unduly influences the predictions produced by the machine learning model. This characteristic represents a generic property that defines a grouping of the training data into a privileged group and an un-privileged group with respect to the predicted outcome. The presence of a characteristic is typically defined by a feature or features within the training data set, and the presence of a characteristic is indicated through a binary indicator variable for each data point in the training data set.

Training a machine learning model whilst ignoring these characteristics or groupings can lead to a number of problems.

First, traditional objective functions used to train a machine learning model are global in nature. As such, the objective function is taken with respect to the entire training data set. Any minority sub-population within the training data set, such as the data points which do not include a characteristic, are correspondingly less important since their contribution to the objective function will be dominated by those data points which do include the characteristic.

Secondly, the determination of whether a data point includes a characteristic is typically based on whether a feature of the data point takes a certain value, or values. However, merely removing the feature and/or the indicator variable from the training data set does not mitigate the influence of the characteristic. Specifically, a machine learning model trained on a training data set which excludes the feature indicative of the characteristic can exhibit performance disparities between the groupings of the training data defined by the characteristic, and can learn their effects on outcomes through other characteristics present in the training data set. This can be through selection effects, quality of features, historical bias, and other such factors.

Thirdly, a machine learning model is trained without knowledge of the decision space, or the threshold function and/or the policy, to which it will be subjected to once trained. As such, any influence arising as a result of a characteristic should be removed directly from the model predictions.

Fourthly, a machine learning model trained on a training data set where a subset of the training data include a protected characteristic having strong influence is open to possible malicious attacks. Specifically, if a machine learning model has learnt to rely on the presence of the protected characteristic during training in order to determine a prediction (i.e. because the protected characteristic is a strong determiner of a predicted output value), then the trained model can be attacked by "spoofing" the presence of the protected characteristic.

As such, it is desirable to train a machine learning model in order to overcome some if not all of the above problems.

**SUMMARY OF INVENTION**

According to an aspect of the invention there is provided a system for training a machine learning model, the system comprising a data input unit configured to receive a training data set comprising a plurality of data points and a plurality of targets associated therewith, wherein a subset of the plurality of data points include a protected characteristic.

The system further comprising a training unit operable to update a current model configuration of the machine learning model. The training unit comprising a prediction unit configured to receive the training data set as input and output a plurality of predicted scores based on the current model configuration of the machine learning model; and an optimisation unit configured to receive the plurality of predicted scores and subsequently determine an updated model configuration of the machine learning model. The system further comprising a control unit configured to constrain operation of the training unit based at least in part on an estimated relationship between the plurality of predicted scores and the protected characteristic such that the influence of the protected characteristic in a subsequent model configuration of the machine learning model is substantially mitigated.

According to a further aspect of the invention there is provided a method for training a machine learning model. The method comprises the steps of receiving a training data set comprising a plurality of data points and a plurality of targets associated therewith, wherein a subset of the plurality of data points include a protected characteristic, and updating a current configuration of the machine learning model. The updating comprising the steps of predicting, using the training data set, a plurality of predicted scores based on the current configuration of the machine learning model, and optimising the current configuration of the machine learning model based on the plurality of targets and the plurality of predicted scores thereby to determine an updated model configuration of the machine learning model. The method further comprising the step of constraining the updating based on an estimated relationship between the plurality of predicted scores and the protected characteristic such that the influence of the protected characteristic in a subsequent model configuration of the machine learning model is substantially mitigated.

According to an additional aspect of the invention there is provided a computer readable medium comprising one or more programs, the one or more programs comprising instructions which when executed by one or more processors of an electronic device cause the electronic device to perform the methods of any one of the claims of the present invention.

Optionally, the optimisation unit is configured to apply a first objective and the control unit is configured to apply a second objective operable to compete with the first objective in order to determine the subsequent model configuration of the machine learning model.

Optionally, the optimisation unit is configured to jointly optimise the first objective and the second objective thereby to determine the updated model configuration of the machine learning model.

Optionally, optimising the second objective reduces the influence of the protected characteristic in the subsequent model configuration of the machine learning model.

Optionally, the second objective is based on the estimated relationship between the plurality of predicted scores and the protected characteristic.

Optionally, the estimated relationship is determined between first group measure and a second group measure.

Optionally, optimising the second objective minimises the difference between the first group measure and the second group measure thereby to reduce the influence of the protected characteristic.

Optionally, the first group measure is indicative of a probability that the subset of the plurality of data points which include the protected characteristic belong to a first group in the plurality of predicted scores.

Optionally, the second group measure is indicative of a probability that a second subset of the plurality of data points which do not include the protected characteristic belong to the first group in the plurality of predicted scores.

Optionally, the control unit is configured to apply a first balancing term to the first objective and a second balancing term to the second objective. Optionally, the second balancing term is based on the first balancing term.

Optionally, the estimated relationship comprises a causal relationship between the plurality of predicted scores and the protected characteristic.

Optionally, the control unit is configured to determine the causal relationship based on an estimated direct effect and an estimated indirect effect.

Optionally, optimising the second objective reduces the estimated direct effect thereby to reduce the influence of the protected characteristic.

Optionally, the estimated directed effect is determined by a first coefficient of a first model and a first coefficient of a second model.

Optionally, optimising the second objective minimises the difference between the first coefficient of the first model and the first coefficient of the second model.

Optionally, the estimated indirect effect is determined by a reference coefficient of a reference model.

Optionally, optimising the second objective matches a second coefficient of the first model to the reference coefficient, and matches a second coefficient of the second model to the reference coefficient.

Optionally, the estimated relationship comprises an explicability score estimated by a surrogate machine learning model.

Optionally, the explicability score is a SHAP value for the protected characteristic.

Optionally, optimising the first objective minimises the difference between the plurality of targets and a subsequent plurality of predicted scores produced by the subsequent configuration of the machine learning model.

Optionally, the control unit is configured to weight the training data set based on the estimated relationship between the plurality of predicted scores and the protected characteristic, whereby the subsequent model configuration of the machine learning model is based on the weighted training data set.

Optionally, the control unit further comprises a surrogate machine learning model configured to receive the training data set and the plurality of predicted scores, and output the estimated relationship between the plurality of predicted scores and the protected characteristic, wherein the estimated relationship comprises an explicability score.

Optionally, the control unit further comprises a weighting unit configured to determine a weight vector based on the estimated relationship and subsequently apply the weight vector to the training data set, wherein the weight vector is configured to mitigate the influence of the protected characteristic.

Optionally, the explicability score is a SHAP value associated with the protected characteristic.

Optionally, the surrogate machine learning model comprises a linear regression model.

Optionally, optimising the current configuration of the machine learning model comprises the step of jointly optimising a first objective and a second objective thereby to determine the updated model configuration of the machine learning model, wherein the second objective is operable to compete with the first objective in order to determine the subsequent model configuration of the machine learning model.

Optionally, optimising the current configuration of the machine learning model comprises the steps of applying a first balancing term to the first objective, and applying a second balancing term to the second objective. Optionally, the second balancing term is based on the first balancing term.

Optionally, the estimated relationship is based on a causal relationship determined between the plurality of predicted scores and the protected characteristic.

Optionally, determining the causal relationship comprises the steps of estimating, for each data point in the plurality of data points, a probability that a data point includes the protected characteristic given the features of the training data set which are not indicative of the protected characteristic; training a first model to predict a first subset of plurality of predicted scores given a first plurality of probabilities for a corresponding plurality of data points in the training data set which include the protected characteristic; training a second model to predict a second subset of plurality of predicted scores given a first plurality of probabilities for a corresponding plurality of data points in the training data set which do not include the protected characteristic; and determining the causal relationship based on an estimated direct effect determined by the first model and the second model, and an estimated indirect effect determined by a reference model.

Optionally, optimising the second objective reduces the estimated direct effect thereby to reduce the influence of the protected characteristic.

Optionally, the reference model is a linear model between the plurality of targets and at least an indicator variable and the plurality of predicted scores for the entire training data set, wherein the reference model is configured to estimate a reference coefficient.

Optionally, optimising the second objective minimises the difference between a first coefficient of the first model and a first coefficient of the second model.

Optionally, optimising the second objective matches a second coefficient of the first model to the reference coefficient, and matches a second coefficient of the second model to the reference coefficient.

Optionally, constraining the updating comprises the step of weighting the training data set based at least in part on the estimated relationship between the plurality of predicted scores and the protected characteristic whereby the subsequent model configuration of the machine learning model is based on the weighted training data set.

Optionally, weighting the training data set comprises the steps of training a surrogate machine learning model on the plurality of data points and the plurality of predicted scores to predict the estimated relationship; and determining a weight vector for the weighting based on the estimated relationship.

Optionally, the computer readable medium is a non-transitory storage medium.

Additional features and advantages of the present invention will be readily apparent from the following detailed description, the accompanying drawings, and the claims.

**BRIEF DESCRIPTION OF DRAWINGS**

Embodiments of the invention will now be described, by way of example only, and with reference to the accompanying drawings, in which:

Figure 1 shows a system for training a machine learning model according to an aspect of the invention;

Figure 2 shows a training data set for use in conjunction with the system of Figure 1;

Figure 3 illustrates the influence of a protected characteristic;

Figure 4 shows an optimisation unit and a control unit according to one embodiment;

Figure 5 illustrates the joint optimisation process performed by the optimisation unit of Figure 4;

Figure 6 shows a control unit according to one embodiment;

Figure 7 illustrates the concept of causal relationships in terms of a causal graph imposed on a training data set;

Figure 8 shows a training unit and a control unit according to one embodiment;

Figure 9 illustrates the training unit and the control unit of Figure 8 over multiple time steps;

Figure 10 shows a method for training a machine learning model according to an aspect of the invention;

Figure 11 shows the step of optimising a current configuration of a machine learning model according to one embodiment;

Figure 12 shows a method for estimating a causal relationship according to one embodiment;

Figure 13 shows the step of controlling the operation of a training unit according to one embodiment; and

Figure 14 shows a block diagram of an embodiment of a computer suitable for performing the method steps of the present disclosure.

## DETAILED DESCRIPTION

Embodiments of the present disclosure will be now described with reference to the attached figures. It is to be noted that the following description is merely used for enabling the skilled person to understand the present disclosure, without any intention to limit the applicability of the present disclosure to other embodiments which could be readily understood and/or envisaged by the reader.

### System for Training a Machine Learning Model

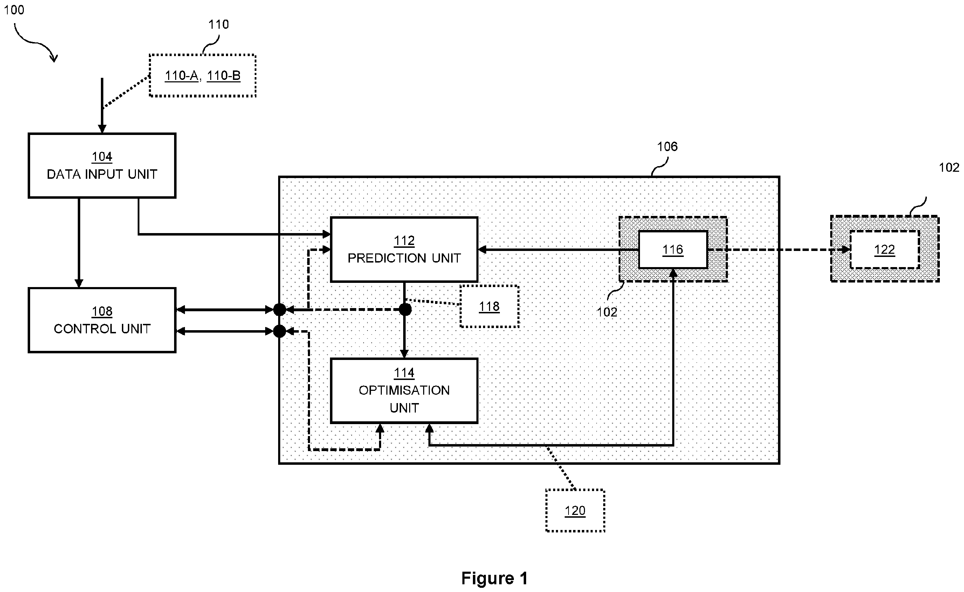

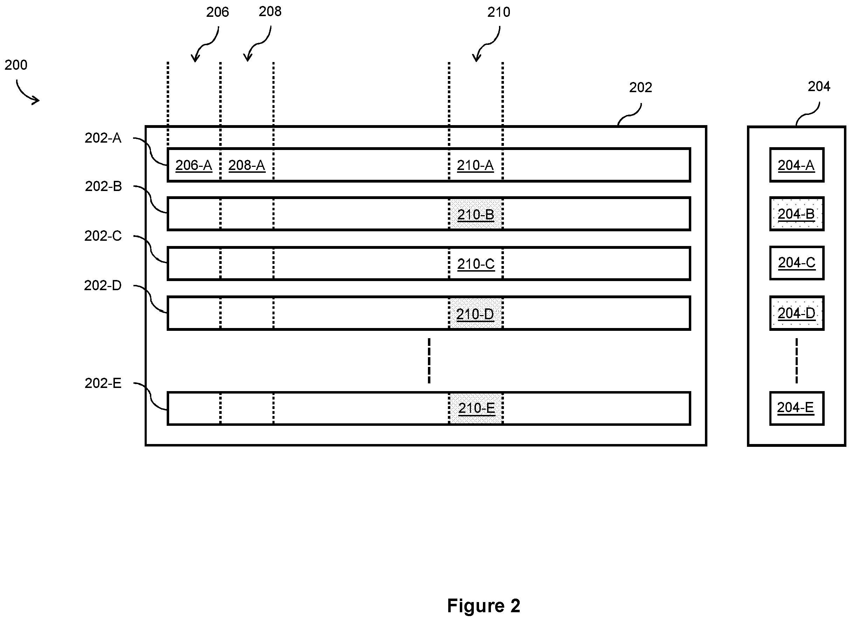

Figure 1 shows system 100 for training machine learning model 102 according to an aspect of the present invention.
System 100 comprises data input unit 104, training unit 106, and control unit 108. Training unit 106 comprises prediction unit 112, optimisation unit 114, and model configuration 116 of machine learning model 102.
Throughout the present disclosure, machine learning model 102 is assumed to be a binary classification model. Within such a setting, machine learning model 102 determines a predicted score for a given real valued input according to the model parameters, or model weights, defined by model configuration 116. Typically, the predicted score represents a probability that the given real valued input is assigned a target value, and a policy or threshold function is used to map the predicted score to a predicted target. Examples of such binary classification models include Support Vector Machines (SVMs), logistic regression models, neural networks, multi-layer perceptrons, AdaBoost, and Naïve Bayes. Although the present disclosure is directed to a binary classification task, the skilled person will readily appreciate that the systems and methods described herein are extensible to multi-class classification through known one-versus-all and one-versus rest paradigms, and can be further extended to regression tasks also.
Data input unit 104 is configured to receive training data set 110 comprising plurality of data points 110-A and corresponding plurality of targets 110-B. Each data point of plurality of data points 110-A is associated with a corresponding target of plurality of targets 110-B. As such, plurality of data points 110-A and plurality of targets 110-B are in one-to-one correspondence. For the task of binary classification, plurality of targets 110-B take one of two possible values, preferably either 1 or 0. As will be discussed in more detail below, a subset of plurality of data points 110-A include a protected characteristic.
A training data set, such as training data set 110, is illustrated in Figure 2.
Figure 2 shows training data set 200 comprising plurality of data points 202 and plurality of targets 204. A subset 202-B, 202-D, 202-E of plurality of data points 202 include a protected characteristic.

Plurality of data points 202 represents a set $X = \{x_i\}_{i=1}^{n}$ of $n$ data points including data points 202-A, 202-B, 202-C, 202-D, 202-E. Plurality of targets 204 represents a set $Y = \{y_i\}_{i=1}^n$ of $n$ targets including targets 204-A, 204-B, 204-C, 204-D, 204-E. Each data point 202-A, 202-B, 202-C, 202-D, 202-E of plurality of data points 202 is associated with a corresponding target 204-A, 204-B, 204-C, 204-D, 204-E of plurality of targets 204. As such, training data set 200 can be represented as ($\boldsymbol{X},\boldsymbol{F}$).

Plurality of data points 202 comprise a possible plurality of features such as features 206, 208, 210. Each data point 202-A, 202-B, 202-C, 202-D, 202-E of plurality of data points 202 comprises a corresponding feature value for each feature of the possible plurality of features. For example, data point 202-A comprises feature values 206-A, 208-A, 210-A for features 206, 208, 210 respectively. The total number of features within plurality of data points 202 is referred to as the dimensionality of plurality of data points 202, or the dimensionality of training data set 200.

Targets 204-A, 204-B, 204-C, 204-D, 204-E each comprise a single value associated with plurality of data points 202. For classification models, targets 204-A, 204-B, 204-C, 204-D, 204-E comprise categorical values, preferably binary values. The value which a target can take can be associated with a positive, or favourable, outcome. Without loss of generality, a positive outcome for binary classification is defined as a target, $y_i$, taking a value 1. However, the skilled person will appreciate that a positive outcome can be any value of the set of possible values which a target can take. Indeed, within a regression task, a positive outcome can be defined as a specific value, or range of values, which a target can take.

A subset 202-B, 202-D, 202-E of plurality of data points 202 include a protected characteristic. The presence of a protected characteristic is indicated through feature 210. That is, feature values 210-B, 210-D, 210-E are indicative of data points 202-B, 202-D, 202-E including a protected characteristic, whereas feature values 210-A, 210-C are indicative of data points 202-A, 202-C not including a protected characteristic. The protected characteristic represents a generic property that defines a grouping of training data set 200 into a privileged group and an un-privileged group. The presence of the protected characteristic is typically defined by a feature or features within the training data set, and the presence of a characteristic is indicated through a binary indicator variable for each data point in the training data set.

As such, training data set 200 comprises two complementary subsets, the set membership of which is determined by the protected characteristic. The first subset comprises data points 202-A, 202-C along with targets 204-A, 204-C, and the second subset comprises data points 202-B, 202-D, 202-E along with targets 204-B, 204-D, 204-E. These subsets can be defined as $\boldsymbol{X} = \boldsymbol{X}_1 \cup \boldsymbol{X}_2$, where $\boldsymbol{X}_1 = \{x_j \mid \boldsymbol{z}_j = 0\}$ and $\boldsymbol{X}_2 = \{x_j \mid \boldsymbol{z}_j = 1\}$. Here, $\boldsymbol{Z} = \{z_i\}_{i=1}^n$ is an indicator variable indicative of whether a data point includes a protected characteristic and corresponds to feature 210. Therefore, training data set 200 can be represented as ($\boldsymbol{X},\boldsymbol{Y},\boldsymbol{Z}$).

Referring once again to Figure 1, training unit 106 is operable to update model configuration 116 of machine learning model 102. Prior to undertaking training, model configuration 116 of machine learning model 102 represents the initial configuration of machine learning model 102. Preferably, training unit 106 undertakes a training process which operates over a number of iterations, and model configuration 116 is updated at each iteration of the training process. Prediction unit 112 is configured to receive training data set 110 as input and output plurality of predicted scores 118 based on model configuration 116. Specifically, prediction unit 112 is configured to receive plurality of data points 110-A and apply each data point therein to machine learning model 102 using model configuration 116 to determine plurality of predicted scores 118. Once trained, machine learning model 102 does not require the indicator of the protected characteristic (e.g. feature 210 shown in Figure 2) and, as such, prediction unit 112 does not require the indicator variable indicative of the presence of a protected characteristic of the protected characteristic. Therefore, whilst the indicator variable indicative of the presence of a protected characteristic is used during the training process, it is preferably not used within model configuration 116 to determine plurality of predicted scores 118.

Preferably, a predicted score corresponds to a probability that the corresponding data point takes the positive outcome. In the setting of binary classification, the probability corresponds to a probability that the corresponding data point belongs to one of the two target values, preferably the target value 1. As described in more detail below, a target is determined from a predicted score by applying an appropriate threshold function.

For example, machine learning model 102 can be a logistic regression model such that model configuration 116 comprises a set of coefficient values for the logistic regression model. In this example, prediction unit 112 is configured to determine, for each data point of plurality of data points 110-A, a predicted score using the set of coefficient values for the logistic regression model. The set of coefficient values correspond in part to the set of all features within the training data set except for the feature comprising the indicator variable, such as feature 210 in Figure 2.

Optimisation unit 114 is configured to receive plurality of targets 110-B and plurality of predicted scores 118, and subsequently determine updated model configuration 120. Preferably, optimisation unit 114 applies a single step of an iterative optimisation process to determine updated model configuration 120. More preferably, optimisation unit 114 uses a differentiable loss function and model configuration 116 to determine updated model configuration 120. The loss function is a measure of the misalignment between plurality of targets 110-B and plurality of predicted scores 118, for example the cross-entropy function.

Continuing the above example, optimisation unit 114 can use a gradient descent approach to determine updated model configuration 120. In this example, optimisation unit 114 determines updated model configuration 120 by determining derivatives with respect to plurality of predicted scores 118; specifically, the determination of updated model configuration 120 is based on a partial derivative of the cross-entropy loss function measured between plurality of targets 110-B and plurality of predicted scores 118 for model configuration 116. The partial derivative determines the direction in which the values of the coefficients of the logistic regression model should be changed in order to determine updated model configuration 120, and further determines the magnitude of the step used to determine updated model configuration 120.

Prediction unit 112, optimisation unit 114, and model configuration 116 are preferably employed in an iterative manner in order to determine final model configuration 122.

For example, in a first iteration, prediction unit 112 is configured to use model configuration 116 to determine plurality of predicted scores 118 from plurality of data points 110-A. Optimisation unit 114 is configured to determine updated model configuration 120 based on plurality of targets 110-B and plurality of predicted scores 118 produced by prediction unit 112. Preferably, optimisation unit 114 is configured to determine updated model configuration 120 based on a loss function measured between plurality of targets 110-B and plurality of predicted scores 118. Model configuration 116 is then updated based on updated model configuration 120. Preferably, model configuration 116 is replaced with updated model configuration 120. Therefore, in a second iteration following the first iteration, prediction unit 112 produces plurality of predicted scores 118 based on updated model configuration 120 from the first iteration.

The iterative training process is performed by training unit 106 until a termination criterion is satisfied. Preferably, the termination criterion comprises a pre-defined number of iterations to perform. Alternatively, the termination criterion is based on the output value of a loss function used by optimisation unit 114, such that the training process is terminated when the output value reaches a pre-determined value. Alternatively, the termination criterion is met when the performance of model configuration 116 converges on a validation data set. After the iterative training process has completed, model configuration 116 becomes final model configuration 122.

Control unit 108 is configured to constrain operation of training unit 106 during a training process. More generally, control unit 108 is configured to constrain operation of training unit 106 such that the influence of the protected characteristic on subsequent iterations of a training process is substantially mitigated. The training process performed by training unit 106 is therefore adapted over a number of iterations as a result of the influence of the protected characteristic on model configuration 116.

A protected characteristic corresponds to an inherent feature, characteristic, aspect, or factor present in plurality of data points 110-A which defines a grouping of training data set 110. More preferably, a protected characteristic corresponds to a set of values, or a value, present in a specific feature of a subset of plurality of data points 110-A. That is, if a single data point $x_i$ comprises d features such that $x_i \in \mathbb{R}^d$ and $x_i^{(k)}$ corresponds to the k-th feature of the data point which indicates the presence of a protected characteristic, then $z_j = x_j^{(k)} = 1$ for all data points in plurality of data points 110-A which include a protected characteristic. Referring to the illustration shown in Figure 2, each of feature values 210-B, 210-D, 210-E indicate the presence of a protected characteristic whereas feature values 210-A, 210-C do not. In one embodiment, a training data set includes a plurality of protected characteristics, the presence of each of which being indicated by a feature in the training data set.

Typically, the feature indicative of the presence of a protected characteristic is not required by the machine learning model to determine a predicted score, either during training or after training has been performed. That is, the *k*-th feature of *X* is excluded when *X* is used by prediction unit 112 of Figure 1. Alternatively, the feature indicative of the presence of a protected characteristic is required by the machine learning model to determine a predicted score. However, and as stated previously, even if the feature indicative of the presence of a protected characteristic is excluded, the protected characteristic can still influence the predicted scores produced by the machine learning model unless the effect of the protected characteristic on the machine learning model is accounted for. That is, the machine learning model learns the effects of the protected characteristic indirectly when the feature indicative of the presence of a protected characteristic is excluded.

A protected characteristic is associated with an influence, or impact, on the machine learning model. The influence of a protected characteristic corresponds to the contribution, or effect, that the protected characteristic has when determining a predicted score using a machine learning model. Preferably, the influence of a protected characteristic corresponds to the contribution, or effect, that the protected characteristic has when determining a probability of a positive outcome using a machine learning model. Therefore, influence arises as a result of training a machine learning model and, furthermore, changes during, and as a result of, training.

In one embodiment, the influence corresponds to a probability that a predicted target value is chosen by a machine learning model for the data points which include the protected characteristic. As the protected characteristic defines a grouping of the training data, the influence of the protected characteristic corresponds to the effect that the group of data points which include the protected characteristic have on the determination of a predicted score by the machine learning model.

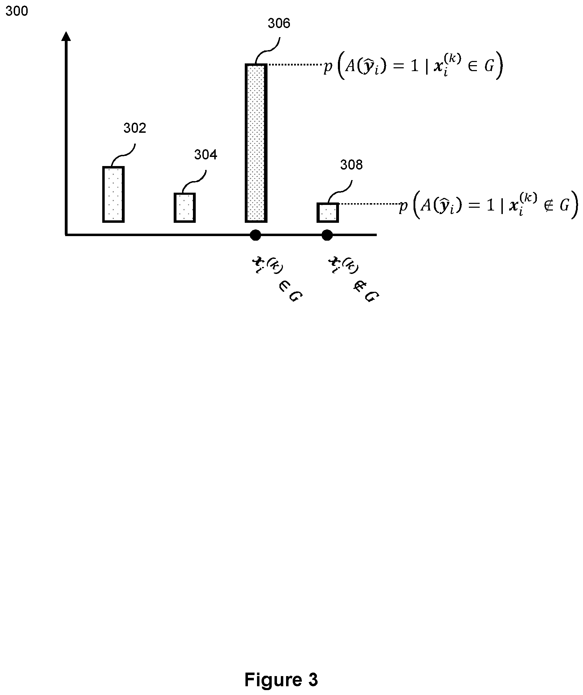

The influence of a protected characteristic is illustrated in Figure 3.

Figure 3 shows an example chart 300 of influences 302, 304, 306, 308. Each influence 302, 304, 306, 308 is illustrative of an influence on a machine learning model given that a feature of the training data takes a certain value. For example, influence 306 corresponds to the probability that the predicted target $A(\hat{y}_i)$ will take the value 1 given the $k$-th feature of a data point $x_i$ indicates the presence of a protected characteristic, i.e. $p\big(A(\hat{y}_i) = 1 \mid x_i^{(k)} = 1\big).$ Therefore, influence 306 corresponds to the influence of a protected characteristic on the machine learning model. In contrast, influence 308 corresponds to the probability that the predicted target will take the value 1 given the k-th feature of a data point does not indicate the presence of a protected characteristic, i.e. $p\big(A(\hat{y}_i) = 1 \mid x_i^{(k)} = 0\big).$ Here, $A(\cdot)$ corresponds to a function which assigns a predicted target to a given predicted score. Preferably, the function is determined based on a policy, such that a predicted score above a threshold value is assigned as having a positive outcome, e.g. assigned a target value of 1.

From the example shown in Figure 3, it can be determined that the machine learning model used to determine the predicted scores ($\hat{Y}$) has an over reliance on the protected characteristic. As a result of training, the machine learning model has given greater influence to data points which include the protected characteristic than those which do not include the protected characteristic.

Therefore, a protected characteristic can introduce bias into the machine learning model during training. Here, the bias associated with a protected characteristic is determined by the influence of the protected characteristic on the machine learning model, specifically the influence of the protected characteristic on the machine learning model assigning a positive outcome. For example, the presence of a protected characteristic within the training data could result in a grouping of the training data whereby the machine learning model penalises data points within one group whilst rewarding data points within another group, i.e. the trained model exhibits bias towards one group.

Although the above description of bias is linked with the concept of fairness, it need not be limited as such. Indeed, the existence of bias in a trained machine learning model as a result of a subset of the training data including a protected characteristic may result in a number of technical problems related to aspects such as security, reliability, interpretability, and accuracy. These aspects are discussed in more detail in the examples provided below.

In order to train a robust machine learning model, the influence of a protected characteristic should be mitigated during training of the machine learning model. Furthermore, the protected characteristic is not required for prediction after the machine learning model has been trained. That is, the feature(s) which determine whether a data point includes a protected characteristic is preferably excluded when determining a prediction. This beneficially resolves potential issues regarding security, privacy, and consent.

Referring once again to Figure 1, control unit 108 is configured to control the training process in order to mitigate the influence of the protected characteristic in the trained machine learning model. Control unit 108 is configured to constrain operation of training unit 106 based at least in part on an estimated relationship between plurality of predicted scores 118 and the protected characteristic such that the influence of the protected characteristic in a subsequent model configuration is substantially mitigated.

Over a number of iterations, the training process performed by training unit 106 is adapted in order to reduce the influence of the protected characteristic within the model configuration of the machine learning model being trained whilst maintaining the overall performance of the machine learning model. That is, the adaption of training unit 106 is not to such an extent as to substantially reduce the predictive power, or accuracy, of the machine learning model.

Final model configuration 122 and machine learning model 102 correspond to the trained machine learning model produced as a result of performing the training operations described above. Preferably, final model configuration 122 is produced as a result of performing the above training operations over a number of iterations. The trained machine learning model can be used to determine predictions on new, previously unseen data, referred to herein as test data. A prediction unit, such as prediction unit 112, is used to determine a predicted score for each data point in the test data using final model configuration 122 of machine learning model 102.

Beneficially, final model configuration 122 is trained such that the presence of the protected characteristic does not unduly influence any predictions produced on new, previously unseen, data points. As such, by constraining the training process performed by training unit 106, control unit 108 reduces the effect of the predicted characteristic on the configuration of the machine learning model thereby to train a more robust and secure machine learning model without substantially reducing the overall predictive power of the machine learning model.

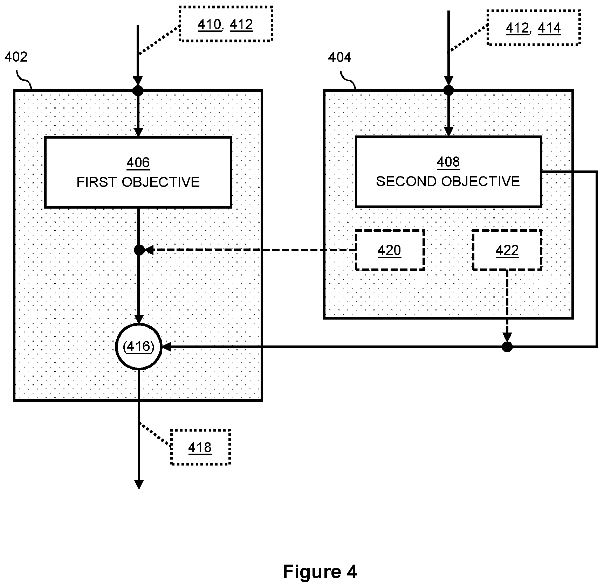

Embodiments of the above system will now be described. In particular, embodiments of components of system 100 which mitigate the influence of a protected characteristic during training of a machine learning model will be described with reference to Figures 4 to 9.

## Regularisation

Figure 4 shows optimisation unit 402 and control unit 404 for use in a system for training a machine learning model, such as system 100 of Figure 1, according to one embodiment. As such, optimisation unit 402 is an embodiment of optimisation unit 114 of Figure 1, and control unit 404 is an embodiment of control unit 108 of Figure 1.

Optimisation unit 402 is configured to apply first objective 406, and control unit 404 is configured to apply second objective 408 operable to compete with first objective 406 in order to determine updated model configuration 418.

Optimisation unit 402 is configured to receive plurality of targets 410 and plurality of predicted scores 412. Plurality of targets 410 is received from a data input unit (not shown), and plurality of predicted scores 412 is received from a prediction unit (not shown). Alternatively, both plurality of targets 410 and plurality of predicted scores 412 are received from a prediction unit (not shown).

Control unit 404 is configured to receive plurality of predicted scores 412 and training data set 414 comprising an indicator variable indicative of whether a data point in training data set 414 includes a protected characteristic. Plurality of predicted scores 412 is received from a prediction unit (not shown) and training data set 414 is received from a data input unit (not shown). Alternatively, both plurality of predicted scores 412 and training data set 414 are received from a prediction unit (not shown).

Preferably, optimisation unit 402 is configured to perform joint optimisation 416 of first objective 406 and second objective 408 thereby to determine updated model configuration 418. Second objective 408 competes with first objective 406 as part of joint optimisation 416 such that the influence of a protected characteristic within training data set 414 is substantially mitigated in updated model configuration 418.

Optimisation unit 402 is preferably configured to undertake a single step of the joint optimisation problem:

$$\underset{w}{\mathrm{argmin}}\left(aL_1\left(\boldsymbol{Y},\widehat{\boldsymbol{Y}}_w\right) + bL_2\left(\widehat{\boldsymbol{Y}}_w,\boldsymbol{Z}\right)\right) \qquad (1)$$

Here, $L_1$ corresponds to first objective 406, $L_2$ corresponds to second objective 408, and w corresponds to a model configuration of the machine learning model being trained. Whilst $L_2$ is shown above as depending on plurality of predicted scores 412, $\widehat{\boldsymbol{Y}}_w$, and the indicator variable $\boldsymbol{Z}$, in some embodiments, $L_2$ is also a function of plurality of targets, $\boldsymbol{Y}$.

Therefore, second objective 408 acts as a regulariser, or regularisation term, to the joint optimisation problem shown in Equation (1). Specifically, the regularisation term reduces the influence of the protected characteristic on the subsequent configuration of the machine learning model. Beneficially, this allows standard optimisation algorithms to be employed by optimisation unit 402 in order to determine a model configuration which is optimal with respect to first objective 406, whilst also applying a regularisation term (i.e. second objective 408) which competes with first objective 406 during the joint optimisation process. As such, any machine learning model which can be trained using a gradient based optimisation approach can be trained using the system of the current embodiment.

Preferably, control unit 404 is configured to apply first balancing term 420 *a* to the output of first objective 406 and second balancing term 422 *b* to the output of second objective 408. Preferably, first balancing term 420 (*a*) and second balancing term 422 (*b*) are a convex sum of a parameter $\lambda$ such that $a = (1 - \lambda)$ and $b = \lambda$. Preferably, the value of parameter $\lambda$ is between 0 and 1, i.e. $\lambda \in [0,1)$. Alternatively, $a = 1$ and $b = \lambda$, where $\lambda > 0$. Therefore, first balancing term 420 and second balancing term 422 are configured to control the trade-off between first objective 406 and second objective 408 during joint optimisation 416. Beneficially, this allows for fine tuning and greater control between the influences of first objective 406 and second objective 408 on joint optimisation 416.

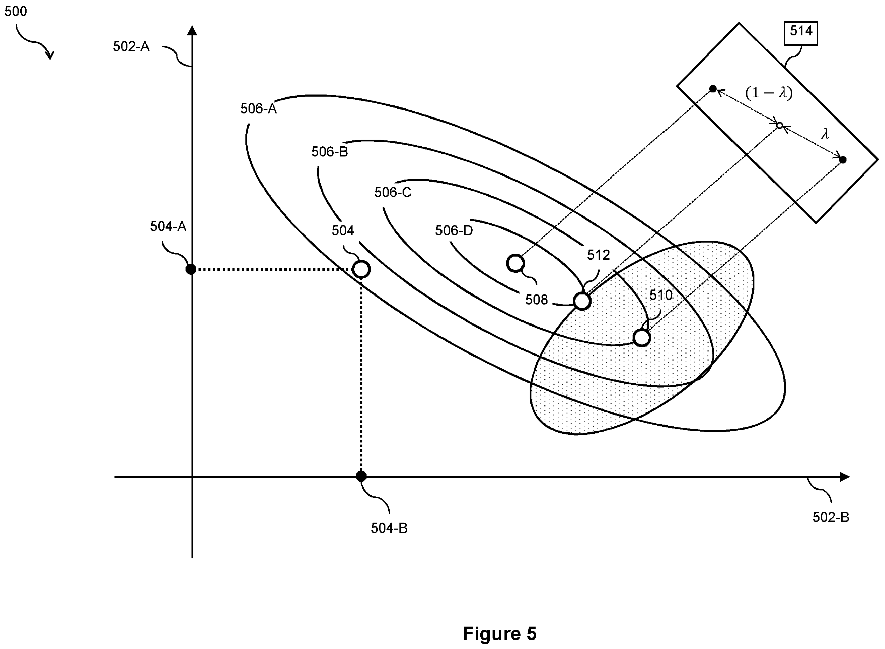

In order to help illustrate the joint optimisation described above, Figure 5 shows a joint optimisation process performed by optimisation unit 402 of Figure 4.

Figure 5 shows model configuration space 500 and axes 502-A, 502-B. Model configuration space 500 comprises the space of all possible model configurations for a machine learning model. For example, if the machine learning model is a one-dimensional linear regression model with a model configuration comprising two weights, then the model configuration space for such a model would comprise two dimensions, one for each weight.

Axes 502-A, 502-B represent the range of values for two weights or parameters of the model configuration. Whilst only two axes are shown in Figure 5, the skilled person will appreciate that the configurations of most machine learning models comprise more than two weights.

Point 504 represents a single model configuration of a machine learning model. Model configuration 504 has weight values 504-A, 504-B and a corresponding loss value (not shown) with respect to the first objective and the second objective (such as first objective 406 and second objective 408 of Figure 4). Isobars 506-A, 506-B, 506-C, 506-D illustrate the relationship between model configuration space 500 and loss values according to the first objective.

Model configuration 508 represents an optimal configuration with respect to the first objective (such as first objective 406 of Figure 4). Model configuration 508 can be considered to minimise the first objective. Conversely, model configuration 510 corresponds to an optimal configuration with respect to the second objective (such as second objective 408 of Figure 4). Model configuration 510 can be considered to minimise the second objective.

Joint optimisation seeks to determine a model configuration which is optimal with respect to both the first and the second objective. In the example shown in Figure 5, model configuration 512 can be considered optimal with respect to the first objective, the second objective, and the balancing terms (such as balancing terms 420, 422 of Figure 4).

The influence of the balancing terms is illustrated in box 514, where the two balancing terms are a convex sum. Specifically, as the parameter $\lambda$ included in each balancing term is decreased, joint optimisation will result in a model configuration closer to optimal model configuration 508 of the first objective. As the parameter $\lambda$ included in each balancing term is increased, joint optimisation will result in a model configuration closer to optimal model configuration 510 of the second objective.

Accordingly, the balancing terms (such as balancing terms 420, 422 of Figure 4) allow for the training process to be modified and adapted to either increase or decrease the influence of the protected characteristic. This provides greater control over the training process and the influence of the protected characteristic on the trained machine learning model.

Referring once again to Figure 4, optimisation of first objective 406 by optimisation unit 402 seeks to minimise the difference between plurality of targets 410 and a subsequent plurality of predicted scores produced by updated model configuration 418. More formally, optimisation of first objective 406 by optimisation unit 402 aims to find an updated model configuration $w'$ such that $L_1(Y, \hat{Y}_{w'}) < L_1(Y, \hat{Y}_w)$. Therefore, optimisation of first objective 406 by optimisation unit 402 occurs over a single step of an optimisation process which corresponds to a single step of an iterative training process (as described previously with respect to Figure 1).

Preferably, first objective 406 ($L_1$) compares plurality of targets 410 ($Y$) and plurality of predicted scores 412 ($\hat{Y}_w$) in order to determine a loss value. As such, first objective 406 returns a value indicative of the degree of difference between plurality of targets 410 ($Y$) and plurality of predicted scores 412 ($\hat{Y}_w$). Preferably, first objective 406 ($L_1$) comprises a differentiable loss function such as the sum of squared errors function or the cross-entropy function. As such, first objective 406 ($L_1$) can be optimised using any iterative gradient based optimisation methods where the partial derivative of $L_1$ given current model configuration w can be calculated in order to determine updated model configuration w' in a single step.

Optimising second objective 408 ($L_2$) by optimisation unit 402 preferably reduces the influence of the protected characteristic. More formally, optimisation of second objective 408 by optimisation unit 402 aims to find an updated model configuration $w'$ such that $L_2(\hat{Y}_{w'}, Z) < L_2(\hat{Y}_w, Z)$. Therefore, optimisation of second objective 408 by optimisation unit 402 occurs over a single step of an optimisation process which corresponds to a single step of an iterative training process (as described previously with respect to Figure 1).

For conciseness, plurality of predicted scores 412 are referred to in the following description as $\hat{Y}$. However, the skilled person will appreciate that $\hat{Y}$ refers to plurality of predicted scores 412 determined using a current model configuration w.

Second objective 408 ($L_2$) is based on an estimated relationship, $R$, between plurality of predicted scores 412 and the protected characteristic. Preferably, second objective 408 is defined as:

$$L_2(\widehat{Y}, Z) = \left(R(\widehat{Y}, Z)\right)^2 \qquad (2)$$

In some embodiments, the second objective is based on an estimated relationship between plurality of predicted scores 412, the protected characteristic, and plurality of targets 410 such that the second objective is defined as:

$$L_2(\widehat{Y}, Z, Y) = \left(R(\widehat{Y}, Z, Y)\right)^2 \qquad (3)$$

As such, whilst the following description is made with reference to second objective 408 being of the form $L_2(\hat{Y}, Z)$, the skilled person will understand that this can also encompasses the case where the second objective is of the form $L_2(\hat{Y}, Z, Y)$.

Here, $R(\hat{Y}, Z)$ corresponds to the estimated relationship between plurality of predicted scores 412 ($Y$) and the protected characteristic. In some embodiments, $R(\hat{Y}, Z, Y)$ corresponds to the estimated relationship between plurality of predicted scores 412 ($\hat{\boldsymbol{Y}}$), the protected characteristic, and plurality of targets 410 (**Y**). The presence of the protected characteristic is indicated through indicator variable **Z**. The square of the estimated relationship is taken in order to ensure that second objective 408 ($L_2$) is always positive and any negative anti-correlations are flipped in sign. Alternatively, the absolute value of the estimated relationship $R(\hat{\boldsymbol{Y}},\boldsymbol{Z})$ is taken such that $L_2(\hat{\boldsymbol{Y}},\boldsymbol{Z}) = |R(\hat{\boldsymbol{Y}},\boldsymbol{Z})|$. Therefore, when $L_2 \approx 0$, the influence of the protected characteristic on the machine learning model is substantially mitigated. As such, minimisation of $L_2$ reduces the difference between data points which include the protected characteristic and data points which do not include the protected characteristic.

Beneficially, joint optimisation 416 of first objective 406 and second objective 408 enables any suitable machine learning model to be trained in such a manner as to mitigate the effect of the protected characteristic on the machine learning model whilst substantially maintaining overall predictive performance of the machine learning model.

In one embodiment, the machine learning model being trained corresponds to a neural network comprising a hidden layer. Optionally, the neural network comprises a plurality of hidden layers. As is known, once trained, the hidden layer is configured to identify features within the input data which are subsequently used for classification (preferably by at least one densely connected layer). Second objective 408 can either be applied to the output of the neural network (as described above), or second objective 408 can be applied to the output of the hidden layer. In an embodiment, a plurality of second objectives are applied to a plurality of hidden layers. When second objective 408 is applied to the hidden layer, then the plurality of predicted scores utilised by control unit 404 corresponds to the outputs of the hidden layer. The neural network can be trained using the modified objective function (as defined in Equation (1)) and backpropagation. Beneficially, training a neural network whilst applying second objective 408 to at least one hidden layer mitigates the effect of the protected characteristic on the "feature engineering" stage of learning. Through regularisation, the neural network thus learns an embedding which mitigates the influence of the protected characteristic.

The use of different estimated relationships for second objective 408 allows for control unit 404 to guide the training process in a number of different ways. Therefore, the embodiment of Figure 4 provides an efficient and flexible system for training any suitable machine learning model in order to mitigate the influence of a protected characteristic. As will be described in more detail in the following, in one embodiment, the estimated relationship comprises a group-based, or associational, relationship. In an alternative embodiment, the estimated relationship comprises a causal relationship.

*Group-Based Relationship*

In one embodiment, the estimated relationship, $R(\hat{\boldsymbol{Y}},\boldsymbol{Z})$, utilised by second objective 408 of Figure 4, comprises a group-based relationship. Specifically, the group-based relationship is calculated between a first group measure and a second group measure.

Preferably, the group-based relationship is calculated as a difference between a first group measure and a second group measure such that:

$$R\left(\hat{\boldsymbol{Y}},\boldsymbol{Z}\right) = M_1 - M_2 \qquad\qquad (4)$$

Alternatively, the group-based relationship is calculated as a summation of differences between a first group measure and a second group measure.

Here, $M_1$ is a first group measure corresponding to the influence of a first group of data points within training data set 414, and $M_2$ is a second group measure corresponding to the influence of a second group of data points within training data set 414. The first group of data points comprise the data points within training data set 414 which include a protected characteristic (i.e. all data points $\boldsymbol{x}_j$ within the group $\{\boldsymbol{x}_j \mid \boldsymbol{z}_j = 1\}$), and the second group of data points comprise the data points within training data set 414 which do not include the protected characteristic (i.e. all data points $\boldsymbol{x}_j$ within the group $\{\boldsymbol{x}_j \mid \boldsymbol{z}_j = 0\}$). As such, an optimal value of $R(\hat{\boldsymbol{Y}},\boldsymbol{Z})$ (i.e. $R(\hat{\boldsymbol{Y}},\boldsymbol{Z}) \approx 0$) indicates that the influence of the protected characteristic is substantially mitigated within the current model configuration as evidenced by plurality of predicted scores 412 ($\hat{\boldsymbol{Y}}$).

The above definition of a group based relationship in Equation (4) beneficially allows for the estimated relationship $R(\hat{\boldsymbol{Y}},\boldsymbol{Z})$ to define a number of different regularisers, or regularisation terms, for use in the joint optimisation problem of Equation (1). The regularisers can be any convex function of the estimated relationship. These regularisers mitigate the effect of the protected characteristic on the trained machine learning model by reducing the influence of the protected characteristic during training. As will be described in more detail below, the different regularisers can be employed either individually, or they can be combined in order to define a multi-regulariser.

As such, the group-based relationship of the present embodiment provides a flexible and extensible framework for reducing the influence of a protected characteristic on a machine learning model configuration being trained using a number of different regularisers, either alone or in combination.

*Regulariser 1: Statistical Parity Difference*

In one embodiment, the first group measure, $M_1$, corresponds to a probability that the subset of the plurality of data points within training data set 414 which include a protected characteristic belong to a first group in plurality of predicted scores 412, and the second group measure, $M_2$, corresponds to a probability that a second subset of the plurality of data within training data set 414 which do not include the protected characteristic belong to the same first group in plurality of predicted scores 412. Preferably, the first group in plurality of predicted scores 412 are those targets assigned a positive outcome, e.g. $\hat{Y} = 1$. Throughout the following description, the positive outcome is considered to be $\hat{Y} = 1$; however, as stated previously, the positive outcome can be any value which the target being predicted can take.

The estimated relationship $R(\hat{Y}, Z)$ used in the regularisation term of the present embodiment is defined as:

$$R(\hat{Y}, Z) = \underbrace{P(A(\hat{Y}) = 1 \mid Z = 1)}_{M_1} - \underbrace{P(A(\hat{Y}) = 1 \mid Z = 0)}_{M_2} \qquad (5)$$

Here, $P(A(\hat{Y}) = 1 \mid Z = 1)$ is the probability of plurality of predicted scores 412 ($\hat{Y}$) being assigned a positive outcome given the presence of the protected characteristic (i.e. $Z = 1$) and policy function $A(\cdot)$ which maps predicted scores to predicted targets. Here, policy function $A(\cdot)$ is shown applied to plurality of predicted scores 412 ($\hat{Y}$), and the skilled person will appreciate that this is equivalent to $\{A(\hat{y}_i)\}_{i=1}^n$.

Throughout the present disclosure, the probability $P(A(\hat{Y}) = 1 \mid ...)$ can be approximated by determining the expected value of plurality of predicted scores 412 at each iteration of the training process, e.g. $P(A(\hat{Y}) = 1 \mid Z = 1) \sim \mathbb{E}[\hat{Y} \mid Z = 1]$ for a given iteration. Throughout, the expectation $\mathbb{E}[\hat{Y} \mid Z = 1]$ corresponds to the average score taken over the plurality of predicted scores 412 given the presence of the protected characteristic (i.e. $Z = 1$).

As such, $P(A(\hat{Y}) = 1 \mid Z = 1)$ is representative of the influence of the data points within training data set 414 which include the protected characteristic. Thus, $P(A(\hat{Y}) = 1 \mid Z = 1)$ is representative of the influence of the protected characteristic. Similarly, $P(A(\hat{Y}) = 1 \mid Z = 0)$ is the probability of plurality of predicted scores 412 ($\hat{Y}$) being assigned a positive outcome given the absence of the protected characteristic (i.e. $Z = 0$). Thus, $P(A(\hat{Y}) = 1 \mid Z = 0)$ is representative of the influence of the data points within training data set 414 which do not include the protected characteristic.

The estimated relationship defined in Equation (4) corresponds to the statistical parity difference, which is a group fairness measure. The statistical parity difference is defined as $P(A(\hat{Y}) = 1 \mid Z = 1) - P(A(\hat{Y}) = 1 \mid Z = 0)$ and is only 0 when $P(A(\hat{Y}) = 1 \mid Z = 1) = P(A(\hat{Y}) = 1 \mid Z = 0)$.

Therefore, second objective 408 according to the present embodiment is defined as:

$$L_2(\hat{Y}, Z) = \left( \mathbb{E}[\hat{Y} \mid Z = 1] - \mathbb{E}[\hat{Y} \mid Z = 0] \right)^2 \qquad (6)$$

Minimisation of second objective 408, as defined in Equation (6), will minimise the difference between predictions produced by the data points within training data set 414 which include the protected characteristic and the predictions produced by the data points within training data set 414 set which do not do not include the protected characteristic. Moreover, minimisation of Equation (6) is equivalent to a maximisation of the disparate impact of plurality of predicted scores 412.

Disparate impact is a group measure of the impact of the protected characteristic on plurality of predicted scores 412 produced by a machine learning model and is defined as:

$$DI(\hat{Y}, Z) = \min\left( \frac{P(A(\hat{Y}) = 1 \mid Z = 1)}{P(A(\hat{Y}) = 1 \mid Z = 0)}, \frac{P(A(\hat{Y}) = 1 \mid Z = 0)}{P(A(\hat{Y}) = 1 \mid Z = 1)} \right) \qquad (7)$$

Crucially, when $DI(\hat{Y}, Z) = 1$ then there is no difference in $A(\hat{Y})$ when $Z = 1$ and when $Z = 0$, whilst $DI(\hat{Y}, Z) = 0$ indicates that the presence of the protected characteristic, i.e. instances where $Z = 1$, strongly influences the positive value of $A(\hat{Y})$. Joint optimisation 416 of first objective 406 ($L_1$) and second objective 408 ($L_2$), as defined in Equation (6), seeks to determine updated model configuration 418 which substantially minimises the difference between plurality of targets 410 and plurality of predicted scores 412 obtained using updated model configuration 418, whilst also substantially minimising the influence of the protected characteristic within updated model configuration 418. Minimisation of the misalignment between plurality of targets 410 and plurality of predicted scores 412 is equivalent to a maximisation of the performance of updated model configuration 418 as measured by a loss function, and minimisation of the influence of the protected characteristic is equivalent to a maximisation of the disparate impact.

Therefore, the regulariser of the present embodiment provides an efficient way of adapting the training process performed by a system (such as system 100 of Figure 1) in order to mitigate the effect of a protected characteristic on the machine learning model being trained. The above group-based probability measure forms a second objective which can compete with a performance based first objective as part of a joint optimisation process in order to train a machine learning model which is both accurate and which is not reliant on the presence of a protected characteristic in order to determine a prediction.

*Regulariser 2: True Positive Difference*

In an alternative embodiment, the first group measure, $M_1$, corresponds to the true positive rate of the plurality of data points within training data set 414 which include a protected characteristic, and the second group measure, $M_2$, corresponds to the true positive rate of the plurality of data points within training data set 414 which do not include a protected characteristic. Beneficially, by modelling the true positive difference, the group-based relationship of the present embodiment accounts for possible imbalances in the training data, and ensures equality of opportunity for both groups to obtain a positive outcome.

The estimated relationship $R(\hat{Y}, Z, Y)$ used in the regularisation term of the present embodiment is defined as:

$$R(\hat{Y}, Z, Y) = \underbrace{P(A(\hat{Y}) = 1 \mid Y = 1, Z = 1)}_{M_1} - \underbrace{P(A(\hat{Y}) = 1 \mid Y = 1, Z = 0)}_{M_2} \qquad (8)$$

Here, $P(A(\hat{Y}) = 1 \mid Y = 1, Z = 1)$ represents the probability of plurality of predicted scores 412 ($\hat{Y}$) being assigned a positive outcome by policy function $A(\cdot)$ for all instances where (a) the training data indicates that the target should take be assigned the positive outcome (e.g. $Y = 1$) and (b) the training data indicates the presence of the protected characteristic (i.e. $Z = 1$).

As such, $P(A(\hat{Y}) = 1 \mid Y = 1, Z = 1)$ is a measure of the influence, i.e. the true positive rate, of the subset of data points within training data set 414 which include a protected characteristic. Thus, the term $P(A(\hat{Y}) = 1 \mid Y = 1, Z = 1)$ is a measure of the influence, i.e. the true positive rate, of the protected characteristic. Similarly, $P(A(\hat{Y}) = 1 \mid Y = 1, Z = 0)$ represents the probability of plurality of predicted scores 412 ($\hat{Y}$) being assigned a positive outcome by policy function $A(\cdot)$ for all instances where (a) the training data indicates that the target should be assigned a positive outcome (e.g. $Y = 1$) and (b) the training data indicates the absence of the protected characteristic (i.e. $Z = 0$). Thus, $P(A(\hat{Y}) = 1 \mid Y = 1, Z = 0)$ is a measure of the influence, i.e. the true positive rate, of the data points within training data set 414 which do not include the protected characteristic.

Therefore, second objective 408 according to the present embodiment is defined as:

$$L_2(\hat{Y}, Z, Y) = \left( \mathbb{E}[\hat{Y} \mid Y = 1, Z = 1] - \mathbb{E}[\hat{Y} \mid Y = 1, Z = 0] \right)^2 \qquad (9)$$

Joint optimisation 416 of first objective 406 ($L_1$) and second objective 408, as defined in Equation (9), seeks to determine updated model configuration 418 which substantially minimises (a) the difference between plurality of targets 410 and plurality of predicted scores 412 obtained using updated model configuration 418, whilst also substantially minimising (b) the influence of the protected characteristic within updated model configuration 418.

When $L_2(\hat{Y}, Z, Y)$ as defined in Equation (9) is approximately equal to 0, then data points belonging to either group, $M_1$ or $M_2$, have the same opportunity to be assigned to the same output (i.e. $A(\hat{Y}) = 1$) given the constraint that they should be assigned to that output (i.e. given $Y = 1$).

*Regulariser 3: Absolute Equalised Odds Difference*

In a further embodiment, the first group measure, $M_1$, corresponds to the true positive rate and true negative rate of the plurality of data points within training data set 414 which include a protected characteristic, and the second group measure, $M_2$, corresponds to the true positive rate and true negative rate of the plurality of data points within training data set 414 which do not include a protected characteristic. Beneficially, the group-based relationship of the present embodiment helps ensure that the accuracy of the predictions produced by the model with respect to the two groups is balanced.

The estimated relationship $R(\hat{Y}, Z, Y)$ used in the regularisation term of the present embodiment is defined as:

$$R(\widehat{Y},Z,Y) = \left| P\big(A(\widehat{Y}) = 1 \mid Y = 1, Z = 1\big) - P\big(A(\widehat{Y}) = 1 \mid Y = 1, Z = 0\big) \right|$$
$$+ \left| P\big(A(\widehat{Y}) = 0 \mid Y = 0, Z = 1\big) - P\big(A(\widehat{Y}) = 0 \mid Y = 0, Z = 0\big) \right| \tag{10}$$

Here, $P(A(\widehat{Y}) = 0 \mid Y = 0, Z = 1)$ corresponds to the true negative rate for all data points within training data set 414 which include a protected characteristic, and $(A(\widehat{Y}) = 1 \mid Y = 1, Z = 1)$ corresponds to the true positive rate for the data points within training data set 414 which include the protected characteristic. Conversely, $P(A(\widehat{Y}) = 0 \mid Y = 0, Z = 0)$ corresponds to the true negative rate for the data points within training data set 414 which do not include a protected characteristic, and $P(A(\widehat{Y}) = 1 \mid Y = 1, Z = 0)$ corresponds to the true positive rate for the data points within training data set 414 which do not include the protected characteristic.

Therefore, second objective 408 according to the present embodiment is defined as:

$$L_2(\widehat{Y},Z,Y) = \sum_{y \in \{0,1\}} \big(\mathbb{E}[\widehat{Y} \mid Y = y, Z = 1] - \mathbb{E}[\widehat{Y} \mid Y = y, Z = 0]\big)^2 \tag{11}$$

Joint optimisation 416 of first objective 406 ($L_1$) and second objective 408, as defined in Equation (11), seeks to determine updated model configuration 418 which substantially minimises (a) the difference between plurality of targets 410 and plurality of predicted scores 412 obtained using updated model configuration 418, whilst also substantially minimising (b) the influence of the protected characteristic within updated model configuration 418.

Beneficially, second objective 408 of the present embodiment helps account for differing rates of outcomes in the two groups.

*Multi-Regulariser*

As stated previously, the above described relationships can be employed either individually, or they can be combined in order to define a multi-regulariser.

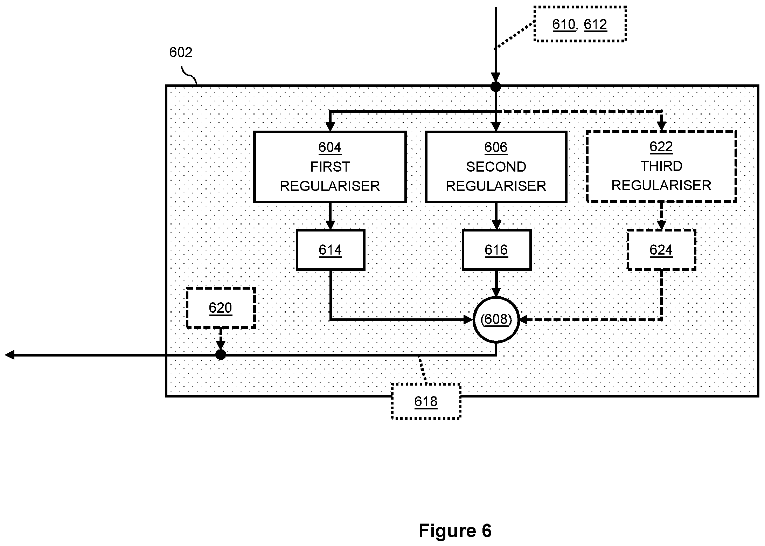

Figure 6 shows control unit 602 employing a multi-regulariser and configured to be used within a system for training a machine learning model (such as system 100 of Figure 1) according to a further embodiment. In particular, control unit 602 is an embodiment of control unit 108 shown in Figure 1.

Control unit 602 comprises first regulariser 604 ($R_1(\cdot)$), second regulariser 606 ($R_2(\cdot)$), and summation unit 608. As described in relation to control unit 404 shown in Figure 4, control unit 602 is configured to receive plurality of predicted scores 610 ($\widehat{Y}$) and training data set 612. Plurality of predicted scores 610 ($\widehat{Y}$) and the indicator variable ($Z$) of training data set 612 are used as input to first regulariser 604, i.e. $R_1(\widehat{Y},Z)$, and second regulariser 606, i.e. $R_2(\widehat{Y},Z)$. In certain embodiments, the plurality of targets ($Y$) of training data set 612 is also used as input to each regulariser.

Control unit 602 further comprises weighting unit 614 and weighting unit 616. Output from first regulariser 604 is adjusted by weighting unit 614 and output from second regulariser 606 is adjusted by weighting unit 616. Summation unit 608 is configured to receive and combine output from weighting unit 614 and weighting unit 616 thereby to determine multi-regulariser output 618. Multi-regulariser output 618 corresponds to the second objective determined by control unit 602. Preferably, control unit 602 is further configured to apply balancing term 620 to multi-regulariser output 618.

Optionally, control unit 602 further comprises third regulariser 622 ($R_3(\cdot)$) and corresponding weighting unit 624, the output of which is received and combined by summation unit 608. Plurality of predicted scores 610($\widehat{Y}$) and the indicator variable ($Z$) of training data set 612 are used as input to third regulariser 622, i.e. $R_3(\widehat{Y},Z)$. In certain embodiments, the plurality of targets ($Y$) of training data set 612 is also used as input to third regulariser 622.

First regulariser 604 corresponds to one of the second objectives defined in Equation (6), Equation (9), or Equation (11), and second regulariser 606 corresponds to a different one of the second objectives defined in Equation (6), Equation (9), or Equation (11). Optionally, third regulariser 622 corresponds to one of the second objectives defined in Equation (6), Equation (9), or Equation (11) such that first regulariser 604, second regulariser 606, and third regulariser 622 comprise the set of all regularisers defined in Equations (6), (9), and (11).

Multi-regulariser output 618 according to the present embodiment is therefore defined as:

$$L_2'(\widehat{Y},Z,Y) = aR_1(\widehat{Y},Z,Y) + bR_2(\widehat{Y},Z,Y) \tag{12}$$

Here, $a$ corresponds to a weighting term applied by weighting unit 614, and $b$ corresponds to a weighting term applied by weighting unit 616. Preferably, $a$ and $b$ are a convex sum of a parameter, $\varepsilon$, such that $a = (1 - \varepsilon)$ and $b = \varepsilon$.

Alternatively, $a = 1$ and $b = \varepsilon$. Therefore, weighting unit 614 and weighting unit 616 are configured to control the influences of first regulariser 604 and second regulariser 606 on second objective $L'_2$. Beneficially, this allows for fine tuning and greater control between the influences of first regulariser 604 and second regulariser 606.

Beneficially, a multi-regulariser provides a flexible and extensible way of mitigating the influence of the protected characteristic on subsequent configurations of the machine learning model. Furthermore, the benefits of the different regularisers, such as improved performance, and handling variances in data size, can be achieved through the use of a single aggregate regularisation term. Therefore, a multi-regulariser helps remove different types of bias from the training process and helps to enforce specific outputs.

*Causal Relationship*

In an alternative embodiment to the group-based relationship embodiment described above, the estimated relationship is based on a causal relationship between the plurality of predicted scores and the protected characteristic. Preferably, the estimated relationship is based on a causal relationship between the plurality of predicted scores and the protected characteristic, and a causal relationship between the plurality of targets and the protected characteristic.

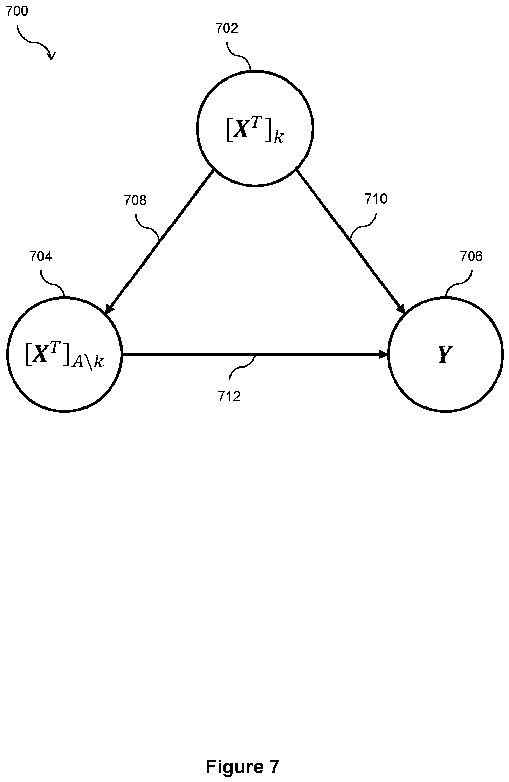

Figure 7 illustrates the concept of causal relationships in terms of causal graph 700.

Causal graph 700 comprising nodes 702, 704, 706 joined by edges 708, 710, 712. Node 702, 704, and 706 represent different variables within the training data set, such as training data set 414 of Figure 4. Specifically, node 702 represents the k-th feature of the plurality of data points, X, which is indicative of the presence of a protected characteristic. Here, each data point within plurality of data points $X$ is a row vector, and thus $[X^T]_k$ corresponds to the $k$-th row of the transpose of plurality of data points $X$, which is equivalent to the $k$-th feature (column) of $X$. Node 704 represents all features of the plurality of data points except for the k-th feature. That is, node 704 represents all features of the plurality of data points which are not indicative of the presence of a protected characteristic. Assuming that $A = \{1,2,...,d\}$ corresponds to the index set of all features of $X$, such that $[X^T]_A = X^T$, then $[X^T]_{A \backslash k}$ is the plurality of data points excluding the $k$-th feature.

By way of example of the above, and with reference to the training data set illustrated in Figure 2, node 702 represents plurality of data points 202 having only a single feature, i.e. feature 210, which is indicative of a protected characteristic. Conversely, node 704 represents plurality of data points 202 having all features (e.g. features 206, 208, etc.) except for feature 210.

Node 706 represents the plurality of targets in the training data set, such as plurality of targets 410 shown in Figure 4.

Each edge 708, 710, 712 is a directed edge describing the causal relationship between two nodes. Node 702 is causally responsible for node 704 and node 706, whilst node 704 is causally responsible for node 706. Put another way, node 706 is causally determined by both node 702 and node 704 which is, in turn, causally determined by node 702.

As such, the causal relationship between the protected characteristic (node 702) and the plurality of targets (node 706) is carried through edge 710. That is, the direct effect of the protected characteristic (node 702) on the plurality of targets (node 706) is carried through edge 710. Similarly, the causal relationship between the protected characteristic (node 702) and the other features of the training data set (node 704) is carried through edge 708, and the causal relationship between the other features of the training data set (node 704) and the plurality of targets (node 706) is carried through edge 712. Thus, the indirect effect of the protected characteristic on the plurality of targets is carried through edge 708 and edge 712.

Therefore, in order to mitigate the influence of the protected characteristic with respect to a causal relationship between the protected characteristic and the plurality of targets, the direct effect of the protected characteristic on the plurality of targets (edge 710) should be unlearnt during training. That is, the direct effect present in the training data set is substantially removed from the indirect effect of the protected characteristic in the plurality of predicted scores during training.

However, it is computationally inefficient to estimate the controlled direct effect directly from the training data as this would require conditioning on all features of the plurality of data points except for the k-th feature and hence would require regressing on all variables.

Therefore, the controlled direct effect of the protected characteristic on the plurality of targets is estimated during training using a balancing or propensity score.

Referring once again to Figure 4, second objective 408 ($L_2$) according to the present embodiment is based on an estimated causal relationship, R, which is based at least in part on an estimated relationship between plurality of targets 410 and the protected characteristic. Preferably, the estimated causal relationship is based at least in part on an estimated relationship between plurality of targets 410 and the protected characteristic, and an estimated relationship between plurality of predicted targets 412 and the protected characteristic. As such, whilst not shown in Figure 4, control unit 404 is configured to receive plurality of targets 410, preferably as part of training data set 414.

A direct causal relationship between the protected characteristic and plurality of targets 410 indicates that the protected characteristic, at least in part, is causally responsible for plurality of targets 410. Such causal responsibility is indicative of the influence, or direct effect, of the protected characteristic on plurality of targets 410. Conversely, an indirect causal relationship between the protected characteristic and plurality of predicted scores 412 indicates that the protected characteristic, at least in part, is causally responsible for plurality of predicted scores 412. Such causal responsibility is indicative of the influence, or indirect effect, of the protected characteristic on plurality of scores 412.

As such, optimisation of second objective 408 will reduce the indirect causal relationship between the protected characteristic and plurality of predicted scores 412 by reducing the contribution of the estimated direct effect on a subsequent configuration of the machine learning model. Thus, by reducing the estimated indirect causal relationship the influence of the protected characteristic in a subsequent model configuration of the machine learning model is substantially mitigated.

During the training process, if the training data set has a controlled direct effect between the protected characteristic and plurality of targets 410, then a machine learning model unaware of the protected characteristic will tend to exploit the systematic differences in the training data set between those data points which include the protected characteristic and those that do not in order to improve predictive performances. To avoid this scenario when removing the controlled direct effect, control unit 404 is configured to constrain the dependency of plurality of predicted scores 412 on such systematic differences.

The controlled direct effect is estimated using a pair of models. Preferably, each model of the pair of models is a parametric model comprising differentiable coefficients with respect to the predicted score, and more preferably each model is a linear model. The first model estimates the direct effect of the data points which include a protected characteristic, and the second model estimates the direct effect of the data points which do not include a protected characteristic.

As such, the relationship between the protected characteristic and plurality of targets 410 is preferably estimated by a pair of linear regression models. Alternatively, any other suitable machine learning models can be used to determine the coefficients, such as logistic regression. Preferably, the linear regression models are of the form:

$$\hat{y}_i = \alpha_1 + \beta_1 p_i \quad , \forall \left\{ \hat{y}_i \mid z_i = 1 \right\} \tag{13}$$

$$\hat{y}_j = \alpha_0 + \beta_0 p_j \quad , \forall \left\{ \hat{y}_j \mid z_j = 0 \right\} \tag{14}$$

Here, $p$ is a probability vector, and $p_i$ represents the probability of data point $x_i$ including a protected characteristic given the features of the training data which are not indicative of a protected characteristic. That is, $p = P(Z = 1 \mid [X^T]_{A\backslash k})$. Alternatively, the relationship between the protected characteristic and plurality of targets 410 is estimated by at least one generalised linear model, and preferably by a pair of generalised linear models.

As such, $p_i$ corresponds to a propensity score and is preferably estimated using linear regression such that, for a single data point, $x^T \in [X^T]_{A\backslash k}$:

$$logit(p) = \log\left(\frac{p}{1-p}\right) = x^T w \tag{15}$$

Here, w is a vector of weights of the linear regression model. Alternatively, any suitable model, such as kernel regression, is used to estimate the propensity scores $p$.

Beneficially, the use of linear regression models in Equations (13), (14), and (15) provides a stable estimate of the causal effects, particularly for larger feature spaces. Specifically, linear regression models help to avoid the issue of non-collapsibility in coefficients, whereby changes in the features (such as adding a feature) drastically change the coefficients learnt. This is particularly beneficial as the coefficients relate to the estimated direct causal relationship (i.e. the magnitude of the direct effect), thus non-collapsibility ensures that the coefficients are correct, stable, and robust.

Control unit 404 is configured to fit the linear models of Equation (13) and Equation (14) at each iteration of the training process.

When the influence of the protected characteristic is minimised, then $(\alpha_1 - \alpha_0) \cong 0$ and both $\beta_1$ and $\beta_0$ will match the indirect effect. Preferably, the indirect effect is estimated by a reference coefficient $\gamma$. More preferably, the reference coefficient $\gamma$ is estimated using a regression model of plurality of targets 410 and indicator variable $Z$ for the entire training data, i.e. a linear regression of the form $Y = a + \gamma P + \zeta Z$. As such, $\gamma$ is representative of the indirect effect and $\zeta$ is representative of the controlled direct effect. Any regression model, such as linear regression or kernel regression, can be used so long as the coefficients are once differentiable with respect to plurality of targets 410 ($Y$).

Therefore, second objective 408 according to the present embodiment is defined as:

$$L_2(\widehat{Y}, Z) = (\alpha_1 - \alpha_0)^2 + \sum_{i \in \{0,1\}} (\beta_i - \gamma)^2 \qquad (16)$$

Minimisation of second objective 408 as defined in Equation (16) will reduce the causal relationship between the protected characteristic and plurality of predicted scores 412 by reducing the contribution of the estimated direct effect on a subsequent configuration of the machine learning model. Furthermore, minimisation of second objective 408 will result in a reduction of the magnitude of the statistical parity difference $P(A(\widehat{Y}) = 1 \mid Z = 1) - P(A(\widehat{Y}) = 1 \mid Z = 0)$.

Beneficially, estimating the controlled direct effect using a pair of models as described above provides a computationally efficient way of adjusting the training process in order to mitigate the predictive power of the protected characteristic, as measured by the controlled direct effect of the protected characteristic.

Furthermore, the use of a reference coefficient controls the extent to which the model utilises systematic differences in the features $[X^T]_{A \backslash k}$ between the data points which include the protected characteristic and the data points which do not include the protected characteristic. By constraining the coefficients of the estimated relationship to the reference coefficient (which controls the indirect effect) the model is not able to increase the indirect effect to compensate for removing the controlled direct effect. In one embodiment, the reference coefficient can be set to a user-defined value in order to control the indirect effect.

**Surrogate Models**

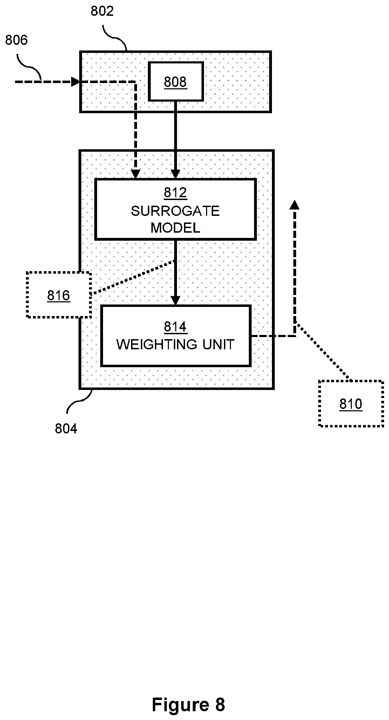

Figure 8 shows training unit 802 and control unit 804 for use in a system for training a machine learning model, such as system 100 of Figure 1, according to one embodiment. As such, training unit 802 and control unit 804 are embodiments of training unit 106 and control unit 108 of Figure 1.

Training unit 802 is configured to receive training data set 806 and determine plurality of predicted scores 808 based on a current model configuration of the machine learning model being trained.

Control unit 804 is configured to weight training data set 806 based at least in part on an estimated relationship between plurality of predicted scores 808 and the protected characteristic, whereby the subsequent model configuration of the machine learning model is based on weighted training data set 810. Alternatively, control unit 804 is configured to weight training data set 806 based at least in part on an estimated relationship between the plurality of predicted targets and the protected characteristic. Preferably, weighting training data set 806 corresponds to apply a vector of weights to the plurality of data points in training data set 806.

Beneficially, subsequent use of weighted training data set 810 by training unit 802 mitigates the influence of the protected characteristic in the subsequent configuration of the machine learning model thereby mitigating the effect of the protected characteristic.

According to the present embodiment, data points within training data 806 are assigned weight values by control unit 804 according to an estimated relationship between the corresponding predicted scores and the protected characteristic. The estimated relationship is based on an explicability score assigned to each data point. Preferably, the explicability score for a data point is a Shapley Additive Explanation (SHAP) value, which provides a unified methodology for interpreting model predictions. Alternatively, the explicability score corresponds to a local interpretable model-agnostic explanation (LIME) value. In the interest of conciseness, the following is described with reference to a SHAP value, though the skilled person will understand that any appropriate explicability framework having directionality and local explanations can be used.

Control unit 804 is configured to shrink the weights of data points having positive SHAP values for the protected characteristic, and boost the weights of data points having SHAP values with a sign, either positive or negative, matching a predetermined sign. According to the present embodiment, the estimated relationship is determined by a surrogate machine learning model, or surrogate model. By re-weighting the data points over a number of iterations, the bias identified by the explicability scores is reduced.

In an alternative embodiment, the absolute values of the SHAP values are determined and control unit 804 is configured to shrink the weights of data points having positive and negative SHAP values. Those data points having an absolute SHAP value closer to 0 are given bigger weights, and the weighting applied to the training data set is the negative of the absolute value.

Control unit 804 comprises surrogate model 812 and weighting unit 814. Surrogate model 812 is configured to receive training data set 806 and plurality of predicted scores 808 thereby to output estimated relationship 816 between plurality of predicted scores 808 and the protected characteristic.

Preferably, estimated relationship 816 is an explicability score, and surrogate model 812 is configured to determine an explicability score for each data point in training data set 806. Preferably, surrogate model 812 is configured to determine, for each data point in training data set 806, an explicability score associated with the protected characteristic in the form of a SHAP value. Alternatively, the explicability score corresponds to a local interpretable model-agnostic explanation (LIME) value. The skilled person will appreciate that any appropriate explicability framework having directionality and local explanations can be used.

As such, surrogate model 812 is a machine learning model that is trained at each iteration of a training process. That is, a new surrogate model is trained at each iteration of the training process. Preferably, surrogate model 812 is a linear regression model which, along with the SHAP values, have a closed form approximation. Beneficially, the use of linear regression provides a more computationally efficient approach to estimation and to weighting training data set 806. Alternatively, the surrogate model is any suitable machine learning model, as described in more detail below.

Weighting unit 814 is configured to receive estimated relationship 816 and produce weighted training data set 810 based on estimated relationship 816. Preferably, weighting unit 814 is configured to determine a weight vector, $v$, based on estimated relationship 816 and subsequently apply the weight vector to training data set 806 thereby to determine weighted training data 810. The weight vector, $v$, comprises a plurality of weight values $v = \{v_i\}_{i=1}^n$ such that each data point, $x_i$, in the plurality of data points of training data set 806 has a corresponding weight value $v_i$.

Preferably, weighting unit 814 is configured to determine the weight vector based on a first weighting rule and a second weighting rule. The first weighting rule sets a weight value for each of the plurality of data points in training data set 806 which have been incorrectly classified in a previous iteration of the training process, and the second weighting rule sets a different weight value for each of the plurality of data points in training data set 806 which have been correctly classified in the previous iteration of the training process. The first weighting rule and the second weighting rule are data point specific penalty terms based on estimated relationship 816.

Accordingly, weighting unit 814 is preferably configured to determine, at time step $(t + 1)$, a weight vector value according to the first weighting rule:

$$w_i^{(t+1)} \leftarrow w_i^t \left( a e^{\alpha} + b e^{\delta S(i)} \right) \quad , \forall i \in \left\{ k \mid A(\hat{y}_k) \neq y_k \text{ and } w_k^{(t)} > 0 \right\} \qquad (17)$$

Furthermore, weighting unit 814 is preferably configured to apply, at time step $(t + 1)$, a weight vector value according to the second weighting rule:

$$w_j^{(t+1)} \leftarrow w_j^t \left( a e^{-\alpha} + b e^{\delta S(j)} \right) \quad , \forall j \in \left\{ k \mid A(\hat{y}_k) = y_k \text{ and } w_k^{(t)} > 0 \right\} \qquad (18)$$

Here, $w = \left\{ w_i^{(t+1)} \right\}_{i=1}^n$ corresponds to a weight vector applied to the plurality of data points of training data set 806 by weighting unit 814 at time step $t + 1$ thereby to determine weighted training data set 810. Preferably, the weight vector is normalised after determining the weight vector values such that $w^{(t+1)} \leftarrow w^{(t+1)} / \sum w^{(t+1)}$. Furthermore, $\alpha$ corresponds to a global measure of the error for the current weak learner (i.e. the model configuration at time step $(t + 1)$, which is the current model configuration combined with $\alpha$) where $\alpha > 0$, $\delta$ corresponds to a parameter taking either a positive or negative value, i.e. $\delta \in \{-1, +1\}$, and $a, b$ correspond to a first and second balancing term. Here, $S(\cdot)$ corresponds to a data point specific penalty term. As described previously, $A(\cdot)$ corresponds to a function which assigns a predicted score to a target value.

In an alternative embodiment, the first weighting rule is $w_i^{(t+1)} \leftarrow w_i^t \left( e^{a\alpha + b\delta S(i)} \right)$ and the second weighting rule is $w_j^{(t+1)} \leftarrow w_j^t \left( e^{-a\alpha + b\delta S(j)} \right)$.

Preferably, the first balancing ($a$) and the second balancing term ($b$) are a convex sum of a parameter, $\lambda$, such that $a = (1 - \lambda)$ and $b = \lambda$. Therefore, the first balancing term and the second balancing term are configured to control the influence of the weighting on the training data. Preferably, the value of parameter $\lambda$ is between 0 and 1, i.e. $\lambda \in [0,1)$. Alternatively, $a = 1$ and $b = \lambda$.

In equations (17) and (18), the data point specific penalty term, $S(\cdot)$, is based on estimated relationship 816. Specifically, the data point specific penalty term is based on a SHAP value associated with the protected characteristic for a given data point, where the SHAP value is estimated by surrogate model 812.

Throughout the following description, surrogate model 812 is described as a linear regression model for simplicity and it has a closed form approximation. However, and as previously stated, any suitable machine learning model can be used as a surrogate model where the SHAP values, $\varphi_i$, associated with the d features of a data point $x_i$ are determined by:

$$g(x_i') = \varphi_i^{(0)} + \sum_{j=1}^{d} \varphi_i^{(j)} x_i' \qquad (19)$$

Here, $g(\cdot)$ is the surrogate model and $x_i'$ is a binary feature vector whose elements indicate whether the feature is present in the data point $x_i$ or missing.. Therefore, $\hat{y}_i = \sum_{j=0}^{d} \varphi_i^{(j)}$. All elements of $x_i'$ are 1 as all features are measured in order to determine the predicted score $\hat{y}_i$. Given, the k-th feature of $x_i$ determines the presence of the protected characteristic, the SHAP value associated with the protected characteristic for data point $x_i$ is $\varphi_i^{(k)}$.

As such, surrogate model 812 can be configured to determine different estimated relationships by estimating different SHAP values. Each estimated relationship is used to define a data point specific penalty term which is used to determine a weight vector as described above.

In one embodiment, surrogate model 812 is a linear regression model of the form:

$$\hat{y}_i = \beta_i^{(0)} + \beta_i^{(z)} z_i + E \qquad (20)$$

Where $E$ is the unexplained error of the linear regression model and $\beta_i^{(0)}$ is the intercept term. The coefficient $\beta_i^{(z)}$ is used to approximate the SHAP value of the protected characteristic through $\varphi_i = \beta_i^{(z)}(z_i - \mathbb{E}[Z])$. As such, estimated relationship 816 is the SHAP value $\varphi_i$, the data point specific penalty term is defined as $S(i) = \varphi_i = \beta_i^{(z)}(z_i - \mathbb{E}[Z])$, and $\delta$ = -1. The expected value $\mathbb{E}[Z]$ corresponds to the expected value of the binary indicator variable taken over all data points.

In an alternative embodiment, surrogate model 812 is a gradient boosted model, such as a tree model or XGBoost, adapted using the formulation of Equation (19). Thus, additional features beyond the binary indicator variable $z_i$ can be included such that $\hat{y}_i = g\left(x_i^{(1)}, x_i^{(2)}, \ldots, z_i\right)$ where $g(\cdot)$ corresponds to surrogate model 812.

Beneficially, applying a weight to training data set 806 according to the SHAP values estimated in Equation (20) increases the disparate impact and reduces the statistical parity difference thereby to mitigate the influence of the protected characteristic.

In a further embodiment, surrogate model 812 is a linear regression model of the form:

$$\hat{y}_i = \beta_i^{(0)} + \beta_i^{(y)} y_i + \beta_i^{(z)} z_i + E \qquad (21)$$

Where $E$ is the unexplained error of the linear regression model and $\beta_i^{(0)}$ is the intercept term. The coefficient $\beta_i^{(z)}$ is used to approximate the SHAP value of the protected characteristic through $\varphi_i = \beta_i^{(z)}(z_i - \mathbb{E}[Z])$. As such, estimated relationship 816 is the SHAP value $\varphi_i^{(z)}$, the data point specific penalty term is defined as $S(i) = \varphi_i^{(z)} = \beta_i^{(z)}(z_i - \mathbb{E}[Z])$ and $\delta$ = -1.

Beneficially, applying a weight to training data set 806 according to the SHAP values estimated in Equation (21) equalises the odds and reduces the equal opportunity difference thereby to mitigate the influence of the protected characteristic.

In another embodiment, surrogate model 812 is a linear regression model of the form:

$$y_i = \beta_i^{(0)} + \beta_i^{(\hat{y})} \hat{y}_i + \beta_i^{(z)} z_i + E \qquad (22)$$

Where E is the unexplained error of the linear regression model and $\beta_i^{(0)}$ is the intercept term. The coefficient $\beta_i^{(z)}$ is used to approximate the SHAP value of the protected characteristic through $\varphi_i = \beta_i^{(z)}(z_i - \mathbb{E}[Z])$. As such, estimated relationship 816 is the SHAP value $\varphi_i^{(z)}$, the data point specific penalty term is defined as $$S(i) = \varphi_i^{(z)} = \beta_i^{(z)}(z_i - \mathbb{E}[Z])$$ and $\delta$ = +1. In an alternative embodiment, surrogate model 812 is a logistic regression model.

Beneficially, applying a weight to training data set 806 according to the SHAP values estimated in Equation (22) increases disparate impact and reduces statistical parity difference thereby to mitigate the influence of the protected characteristic.

As will be described in more detail below, the surrogate modelling approach described in relation to Figure 8 is repeated at each step of the training process.

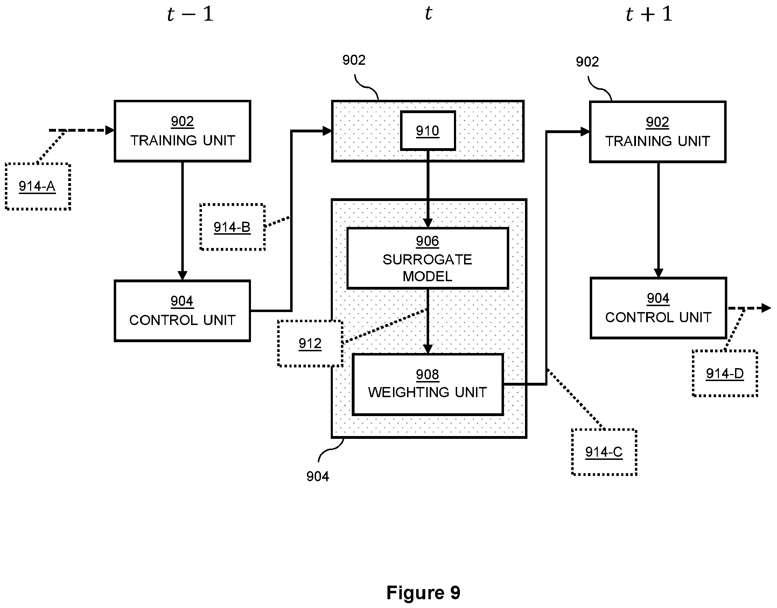

Figure 9 illustrates the surrogate modelling training process of Figure 8 at time steps *t* - 1, *t*, and *t* + 1.

Figure 9 shows training unit 902 and control unit 904 at time steps *t* - 1, *t*, and *t* + 1. As in Figure 8, control unit 904 comprises surrogate model 906 and weighting unit 908. Training unit 902 is configured to determine plurality of predicted scores 910 which are input to surrogate model 906. Surrogate model 906 is configured to determine estimated relationship 912 which is input to weighting unit 908.

At time step *t* - 1, training unit 902 is configured to receive training data set 914-A. If time step *t* - 1 comprises the first step in the training process, then training data set 914-A comprises the un-weighted plurality of data points. Alternatively, training data set 914-A received at time step *t* - 1 comprises a weighted plurality of data points. At time step *t* - 1, control unit 904 is configured to receive a plurality of predicted scores from training unit 902 and determine weighted training data set 914-B which is used as input to training unit 902 at time step *t*. Weighted training data set 914-B is determined such that the influence of the protected characteristic in the model configuration determined at time step *t* is substantially mitigated. Here, the influence corresponds to an explicability score as measured by an external auditor, which is accounted for by surrogate model 906.

At time step *t*, training unit 902 is configured to receive weighted training data set 914-B comprising plurality of data points weighted by control unit 904 at the previous time step. At time step *t*, training unit 902 is configured to determine plurality of predicted scores 910 based on weighted training data set 914-B and the current model configuration. At time step *t*, control unit 904 is configured to receive plurality of predicted scores 910 from training unit 902 and determine weighted training data set 914-C which is used as input to training unit 902 at time step *t* + 1. Weighted training data set 914-C is determined such that the influence of the protected characteristic in the model configuration determined at time step *t* + 1 is substantially mitigated.

At time step *t*+1, training unit 902 is configured to receive weighted training data set 914-C comprising plurality of data points weighted by control unit 904 at the previous time step. At time step *t* + 1, control unit 904 is configured to receive plurality of a predicted scores from training unit 902 and determine weighted training data set 914-D which is used as input to training unit 902 at the next time step. Weighted training data set 914-D is determined such that the influence of the protected characteristic in the model configuration determined at the next time step is substantially mitigated.

As such, at each iteration of the training process, a new surrogate model is learnt in order to determine an iteration specific estimated relationship which is used to mitigate the influence of the protected characteristic in the model configuration of the subsequent iteration.

Beneficially, the embodiments of Figures 8 and 9 provide a flexible and extensible framework for mitigating the predictive power of a protected characteristic through training a surrogate model at each iteration of the training process. The surrogate model can be informally considered to "explain" the predictions produced by a current configuration of the machine learning model, and the "explanations" produced are used to weight the training data and guide future updates of the model configuration. As described above, different surrogate models can be beneficially used to enforce specific constraints of the training process (and so identify and penalise specific biases) without requiring any modification of the machine learning model being trained. Thus, the embodiments of Figures 8 and 9 are applicable to any iteratively trained machine learning model.

Furthermore, the use of a surrogate model provides a means of explaining a prediction produced by a configuration of the machine learning model. Therefore, the output of the surrogate model can not only be used by a machine learning training system to mitigate the influence of a protected characteristic, but can further be used by a human observer in order to determine the extent to which the protected characteristic influences the current configuration of the machine learning model. For complex "black box" models, such as deep neural networks, the information provided by a surrogate model can be used to help test and understand the predictions produced by the machine learning model.

*Surrogate Model Regularisation*

In one embodiment, the surrogate models described in relation to Equations (20) to (22) are used to define surrogate model specific regularisers which can be used as part of the training system described in relation to Figure 4.

As stated previously, optimisation unit 402 is preferably configured to undertake a single step of the joint optimisation problem:

$$\underset{w}{\mathrm{argmin}}(aL_1 + bL_2) \tag{23}$$

Here, $L_1$ corresponds to first objective 406, $L_2$ corresponds to second objective 408, and w corresponds to a model configuration of the machine learning model being trained. Optimisation unit 402 is configured to apply first objective 406, and control unit 404 is configured to apply second objective 408 operable to compete with first objective 406.

According to the current embodiment, control unit 404 is configured to determine second objective 408 based on a surrogate model. As described in detail above, the surrogate model can be configured to determine different estimated relationships by estimating different explicability values. The following description is directed to the explicability values being SHAP values, though the skilled person will appreciate that any appropriate explicability scores can be used. Preferably, the explicability values are SHAP values.

Preferably, the surrogate model is a linear regression model. Beneficially, linear regression is computationally efficient to compute and its SHAP values have a closed form approximation which is computationally efficient to determine. Alternatively, the surrogate model is any suitable machine learning model, such as logistic regression, adapted using the formulation of Equation (19).

In one embodiment, the surrogate model is a linear regression model on the observed model logits of the form:

$$logit(\widehat{\boldsymbol{y}}_i) = \beta_i^{(y)}\boldsymbol{y}_i + \beta_i^{(z)}\boldsymbol{z}_i + E \tag{24}$$

Here, E corresponds to the unexplained error of the model. The coefficient $\beta_i^{(z)}$ is used to approximate the SHAP value of the protected characteristic through $\varphi_i^{(z)} = \beta_i^{(z)}(\boldsymbol{z}_i - \mathbb{E}[\boldsymbol{Z}]).$ Similar, coefficient $\beta_i^{(y)}$ is used to approximate the SHAP value through $\varphi_i^{(y)} = \beta_i^{(y)}(\boldsymbol{y}_i - \mathbb{E}[\boldsymbol{Y}]).$ As such, second objective 408 corresponds to:

$$L_2 = \sum_{i=1}^{n}\left(\left(\varphi_i^{(y)}\right)^2 + \left(\varphi_i^{(z)}\right)^2\right) \tag{25}$$

The square of each term is taken in order to ensure that the SHAP value contribution to second objective 408 is determined only by the magnitude. Alternatively, the absolute difference of each can be taken.

In a further embodiment, the surrogate model is a linear regression model of the form:

$$logit(\widehat{\boldsymbol{y}}_i) = \beta_i^{(z)}\boldsymbol{z}_i + E \tag{26}$$

Here, E corresponds to the unexplained error of the model. The coefficient $\beta_i^{(z)}$ is used to approximate the SHAP value of the protected characteristic through $\varphi_i^{(z)} = \beta_i^{(z)}(\boldsymbol{z}_i - \mathbb{E}[\boldsymbol{Z}]).$ As such, second objective 408 corresponds to:

$$L_2 = \sum_{i=1}^{n}\left(\varphi_i^{(z)}\right)^2 \tag{27}$$

The square is taken in order to ensure that the SHAP value contribution to second objective 408 is determined only by the magnitude. Alternatively, the absolute difference can be taken.

In an additional embodiment, the surrogate model is a linear regression model of the form:

$$\boldsymbol{y}_i = \beta_i^{(\hat{y})} logit(\hat{\boldsymbol{y}}_i) + \beta_i^{(z)} \boldsymbol{z}_i + E \tag{28}$$

Here, E corresponds to the unexplained error of the model. The coefficient $\beta_i^{(z)}$ is used to approximate the SHAP value of the protected characteristic through $\varphi_i^{(z)} = \beta_i^{(z)}(\boldsymbol{z}_i - \mathbb{E}[\boldsymbol{Z}])$. As such, second objective 408 corresponds to:

$$L_2 = -\sum_{i=1}^{n} \left(\varphi_i^{(z)}\right)^2 \tag{29}$$

The square is taken in order to ensure that the SHAP value contribution to second objective 408 is determined only by the magnitude. Alternatively, the absolute difference can be taken.

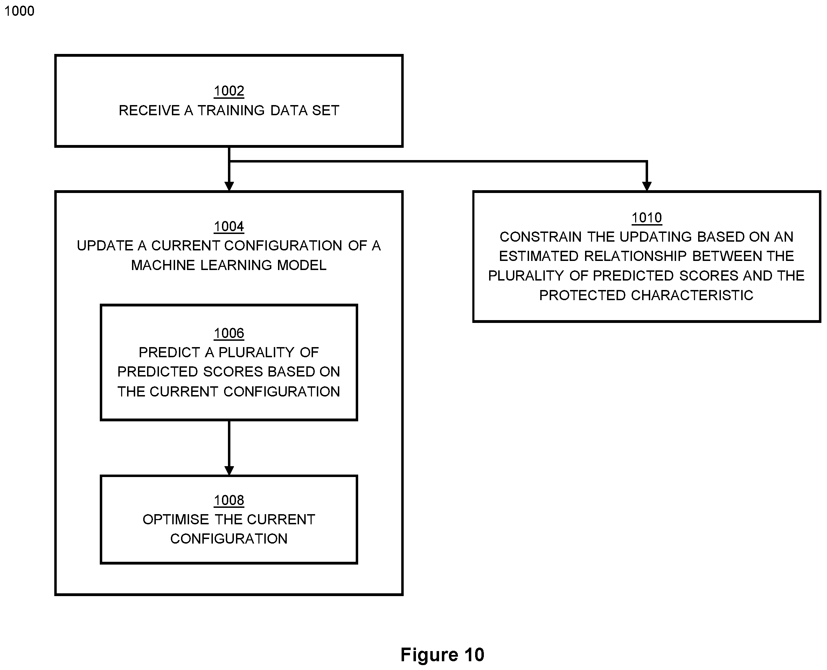

Figure 10 shows method 1000 for training a machine learning model on training data.

Further details regarding the methods shown in Figures 10 to 13 are described in relation to Figures 1 to 9. For conciseness, these details are not repeated below, but the skilled person will appreciate that the specific features described in relation to Figures 1 to 9 are applicable to the features described in relation to the methods of Figures 10 to 13.

Method 1000 comprises method steps 1002, 1004, 1006, 1008, and 1010.

Step 1002 comprises receiving a training data set comprising a plurality of data points and a corresponding plurality of targets associated therewith, wherein a subset of the plurality of data points include a protected characteristic.

Step 1004 comprises updating a current configuration of the machine learning model. Step 1004 comprises steps 1006, 1008.

Step 1006 comprises predicting, using the training data, a plurality of predicted scores based on the current configuration of the machine learning model.

Step 1008 comprises optimising the current configuration of the machine learning model thereby to determine an updated model configuration of the machine learning model.

Step 1010 comprises constraining the updating based on an estimated relationship between the plurality of predicted scores and the protected characteristic such that the influence of the protected characteristic in a subsequent model configuration of the machine learning model is substantially mitigated.

Preferably, steps 1006, 1008, and 1010 are repeated for a set number of iterations. Alternatively, steps 1006, 1008, and 1010 are repeated until the performance of the updated configuration of the machine learning model converges on a validation data set.

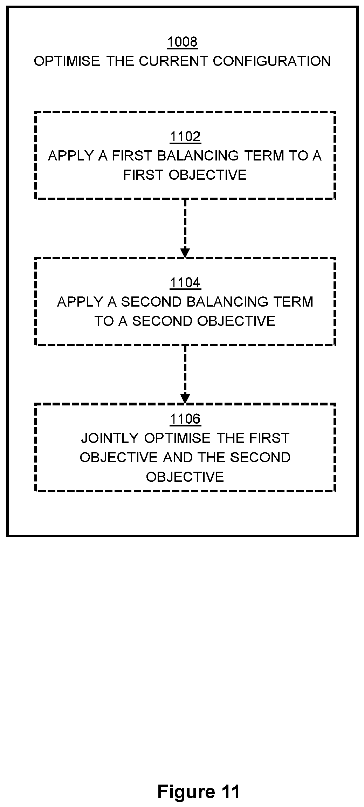

Figure 11 shows an embodiment of step 1008 of Figure 10.

Step 1008 optionally comprises steps 1102, 1104, 1106.

Step 1102 comprises applying a first balancing term to a first objective.

Step 1104 comprises applying a second balancing term to a second objective.

Step 1106 comprises jointly optimising the first objective and the second objective thereby to determine the updated model configuration of the machine learning model, wherein the second objective is operable to compete with the first objective.

In one embodiment, second objective is based on an estimated relationship determined between a first group measure and a second group measure.

In one embodiment, the second objective is based on a causal relationship determined between the plurality of predicted scores and the protected characteristic.

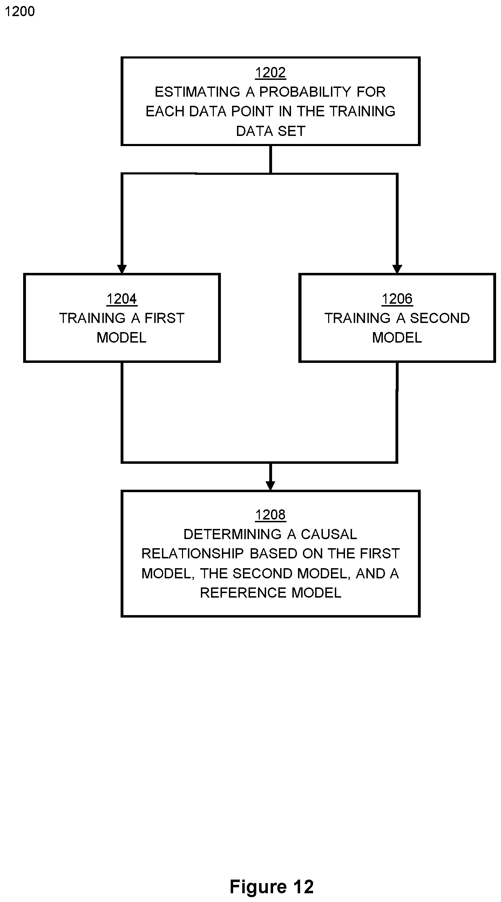

Figure 12 shows method 1200 for determining a causal relationship according to one embodiment.

Method 1200 comprises steps 1202, 1204, 1206, 1208.

Step 1202 comprises estimating, for each data point in the plurality of data points, a probability that a data point includes the protected characteristic given the features of the training data set which are not indicative of the protected characteristic.

Step 1204 comprises training a first model to predict a first subset of plurality of predicted scores given a first plurality of probabilities for a corresponding plurality of data points in the training data which include the protected characteristic.

Step 1206 comprises training a second model to predict a second subset of plurality of predicted scores given a first plurality of probabilities for a corresponding plurality of data points in the training data which do not include the protected characteristic.

Step 1204 and step 1206 are performed in parallel. Alternatively, step 1204 is performed before step 1206, or step 1206 is performed before step 1204.

Step 1208 comprises determining the causal relationship based on an estimated direct effect determined by the first model and the second model, and an estimated indirect effect determined by a reference model.

Optionally, optimising the second objective reduces the estimated direct effect thereby to reduce the influence of the protected characteristic.

Optionally, the reference model is a linear model between the plurality of targets and at least an indicator variable and the plurality of predicted scores for the entire training data set, wherein the reference model is configured to estimate a reference coefficient.

Optionally, optimising the second objective minimises the difference between a first coefficient of the first model and a first coefficient of the second model.

Optionally, optimising the second objective matches a second coefficient of the first model to the reference coefficient, and matches a second coefficient of the second model to the reference coefficient.

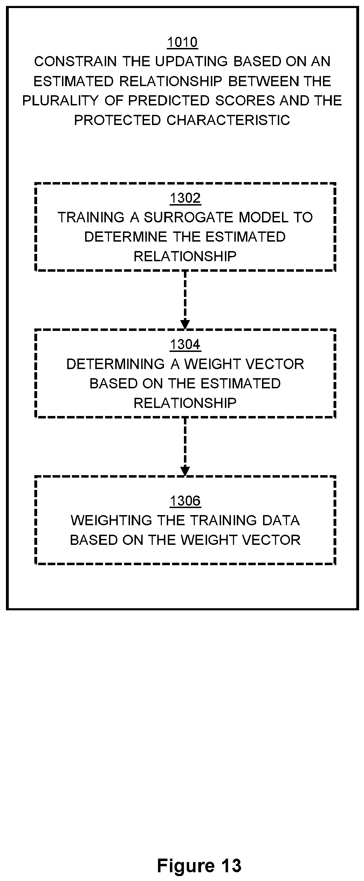

Figure 13 shows an embodiment of step 1010 of Figure 10.

Step 1010 optionally comprises steps 1302, 1304, 1306.

Step 1302 comprises training a surrogate machine learning model on the plurality of data points and the plurality of predicted scores to predict the estimated relationship.

Step 1304 comprises determining a weight vector for the weighting based on the estimated relationship.

Step 1306 comprises weighting the training data set based at least in part on the estimated relationship between the plurality of predicted scores and the protected characteristic whereby the subsequent model configuration of the machine learning model is based on the weighted training data.

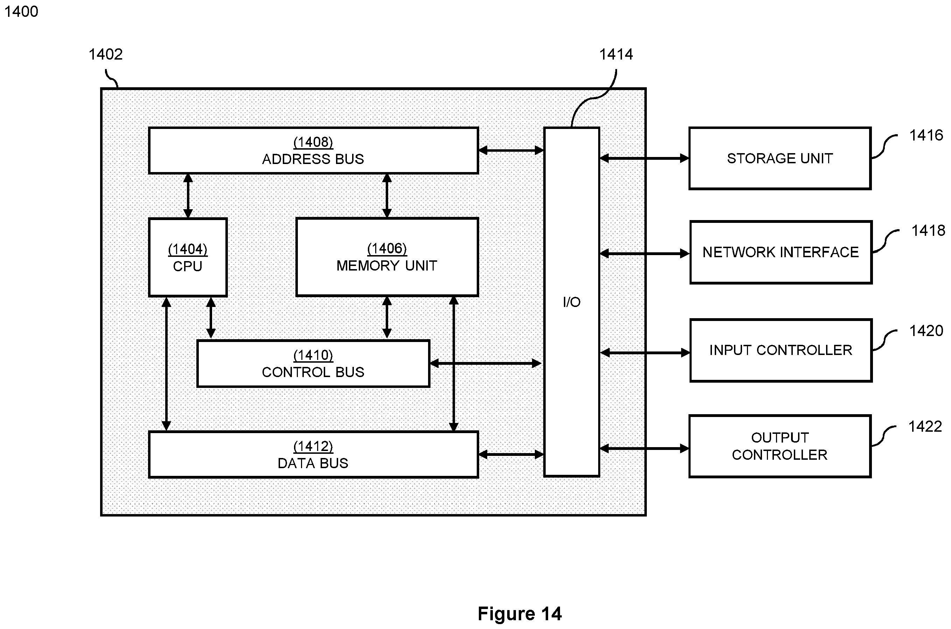

Figure 14 shows a block diagram of an embodiment of a computer suitable for performing the method steps of the present disclosure.

Computer 1400 comprises central control unit 1402 comprising CPU 1404 and memory unit 1406. CPU 1404 is communicatively coupled to memory unit 1406 via address bus 1408, control bus 1410, and data bus 1412. Central control unit 1402 further comprises I/O interface 1414 communicatively coupled to address bus 1408, control bus 1410, and data bus 1412.

Computer 1400 further comprises storage unit 1416, network interface 1418, input controller 1420, and output controller 1422. Storage unit 1416, network interface 1418, input controller 1420, and output controller 1422 are communicatively coupled to central control unit 1402 via the I/O interface 1415.

Storage unit 1416 is a computer readable medium comprising one or more programs, the one or more programs comprising instructions which when executed by CPU 1404 cause computer 1400 to perform the method steps of the present disclosure.

Optionally, storage unit 1416 is a non-transitory storage medium.

**Specific Example: Information Security**

The present invention can beneficially protect against possible attacks upon a trained machine learning model by mitigating the influence of a protected feature during the training process.

As an example, and with reference to Figure 2, training data set 200 comprises plurality of data points 202. Each data point in plurality of data points 202 corresponds to a request for a service made over a network. Plurality of targets 204 indicate whether or not the corresponding service request is genuine, and so should be accepted, or potentially malicious, and so should be rejected. Each feature, such as features 206, 208, 210 illustrated in Figure 2, corresponds to a particular feature of the service request. Examples of such features include user data, header information, timestamps, and the like.

Feature 210 is indicative of whether or not a data point includes a protected characteristic, the effect of which should be mitigated during training of the machine learning model. If feature 210 takes on a certain value, such as values 210-B, 210-D, 210-E, then the associated data points 202-B, 202-D, 202-E are taken to include a protected characteristic.

Within the context of the present example, the protected characteristic corresponds to the source location of a service request. The source location closely correlates with genuine service requests such that the presence or absence of the protected characteristic has high influence relative to the other features. For example, for the majority of requests, when the source location takes on the value "California, US" then the request is deemed to be genuine.

However, as the source location of a service request can be easily spoofed, e.g. through the use of a proxy service, then the relative influence of the source location should be mitigated during training without substantially reducing the influence of the overall machine learning model. The presence of the protected characteristic is still beneficial in the final model even with a substantially reduced contribution to the determination of a predicted score.

Therefore, a machine learning model can be trained on the training data described above in order to produce a trained machine learning model which is able to take a request as input and produce an output indicative of whether the request is genuine or potentially malicious.

In the present example, and with reference to Figure 1, training unit 106 and control unit 108 are used to execute a training process over a number of iterations. The machine learning model 102 to be trained comprises a logistic regression model, and the prediction unit 112 outputs the plurality of predicted scores 118 for a given input according to the model configuration 116 of the logistic regression model 102.

The model configuration 116 comprises a set of coefficients for each feature of the training data. The optimal values of the coefficients are determined during the training process using the optimisation unit 114, which employs a gradient descent algorithm to incrementally adapt the values of the coefficients over a number of iterations.

During the training process, the relationship between the plurality of predicted scores 118 and the protected characteristic is estimated by the control unit 108, and the operation of the training unit 106 is iteratively adapted in order to mitigate the influence of the protected characteristic in the updated model configuration 120 of the logistic regression model 102.

That is, during an iteration of the training process, the estimated relationship between the predicted scores and the protected characteristic is used to reduce the influence, or influence, of the protected characteristic in subsequent iterations of the training process. In so doing, it may be that the influence of other features or characteristics are increased or improved.

Once the training process has finished, the machine learning model 102 comprises a final model configuration 122 within which the influence of the protect characteristic has been substantially mitigated.

Whilst the above description is made with reference to a request for a network service, the present invention is in no way limited as such. The present invention can be applied in any area where the presence or absence of a protected characteristic may in some way strongly correlate with a target value, and helps improve security of any machine learning model trained according to the present invention by mitigating the influence of the protected characteristic. Thus, the trained machine learning model is less susceptible to spoofing attacks by unauthorised manipulation of the protected characteristic in order to obtain a certain predicted score.

**Specific Example: Clinical Trials**

The effectiveness of a treatment is frequently estimated from randomised binary clinical trials involving two randomised cohorts of patients-treatment and control. The patients within the treatment group receive the medical treatment, and those patients within the control group receive either no treatment or a placebo.

The effectiveness of the treatment is evaluated using generalised linear models (GLM) such as linear regression, exponential regression, and logistic regression. Such GLMs are used in conjunction with patient data (such as demographics and medical history), as well as a binary variable indicating what cohort they belong to. The coefficients of the GLMs measure the risk difference, relative risk, and odds ratios as the corresponding variable is varied respectively.

When performing the modelling described above, it is often necessary to stratify according to specific demographics such as age, gender, or race. Such stratification leads to additional insights regarding the outcomes of the treatment for those specific demographics, as well as controlling for potentially confounding factors.

By construction, stratification reduces the amount of data available for building the corresponding strata-specific models, and in cases where specific demographics are under-represented, the ability to build a well-fitted predictive model with well estimated coefficients comparable to a larger stratum is infeasible. The problem of under-representation of specific groups within clinical trial data can lead to worse risk estimates for these groups, and trained models may not discover meaningful patterns for these sub-populations where the treatment might be effective.

Accordingly, and following the embodiments of Figure 1 and Figure 4, a generalised linear model 102 is trained in order to determine the effectiveness of a treatment. Training data set 110 comprises a plurality of data points and a corresponding plurality of targets. The plurality of data points corresponds to data related to a plurality of patients involved in the clinical trial, and the plurality of targets are indicative of the effectiveness of the treatment. A subset of the plurality of data points include a protected characteristic indicative of the corresponding patient being a member of an under-represented group comprising one or more demographics such that a value of 1 indicates that they are a member of a majority group, and a value of 0 indicates that they are a member of an under-represented group.

As described with reference to Figure 4, optimisation unit 402 of training unit 106 is configured to apply first objective 406, and control unit 404 is configured to apply second objective 408. Second objective 408 is operable to compete with first objective 406 thereby to update a configuration of the generalised linear model 102. First objective 406 corresponds to the objective function of generalised linear model 102, and second objective 408 corresponds to the square of the statistical parity difference as defined in Equation (5).

Joint optimisation 416 of first objective 406 and second objective 408 determines the optimal configuration of generalised linear model 102 whilst also maximising the disparate impact. Specifically, minimisation of second objective 408 will ensure that generalised linear model 102 mitigates the predictive power of the protected characteristic, i.e. the predictive power of being assigned into the majority demographic. As such, the trained model will make predictions regarding the efficacy of the treatment independently of whether or not a data point includes the protected characteristic (i.e. the data point is associated with majority demographic group, or an under-represented demographic group).

Beneficially, by constraining the training of the GLM in the manner described above, the machine learning model is trained on all the training data that is available, and under-represented demographic groups in the training data receive equitable predictive performance compared to majority demographics. Therefore, a more robust machine learning model is trained by mitigating the predictive power of the protected characteristic.

## Specific Example: Image Classification

In many image-based security and surveillance systems, it is necessary to identify an image, a video frame, or a portion of an image/video frame as comprising a human face. For example, certain public places such as airports, train stations, or sporting venues, pose a greater security threat due to the large volume of people passing through at any one time. In order to mitigate such a security threat, or to perform post-hoc analysis of a population after a security event, it is desirable to identify automatically humans present within a video feed of the location. For large public locations, manual identification would be infeasible.

Traditionally, a classification model would be trained on a training data set of labelled examples of human faces and labelled examples of other objects and/or background. The availability and quality of image examples for individuals from minority backgrounds can result in disparate outcomes for instances containing individuals from those backgrounds.

Accordingly, and following the embodiments of Figure 1 and Figure 8, a convolutional neural network 102 is trained in order to classify a portion of an image as including a human face. Preferably, convolutional neural network 102 is a multi-task cascaded convolutional network. Training data set 110 comprises a plurality of data points and a corresponding plurality of targets. The plurality of data points corresponds to example facial and non-facial images, and the plurality of targets are indicative of whether the corresponding image is a face or another object. A subset of the plurality of data points include a protected characteristic indicative of the corresponding face image belonging to an under-represented demographic group such that a value of 1 indicates that they are a member of a majority demographic, and a value of 0 indicates that they are a member of an under-represented demographic group.

At each step of the training process, the data points corresponding to human faces are weighted in order to mitigate the predictive power of the protected characteristic. Specifically, the data points corresponding to human faces are weighted according to a weight vector determined by the weighting rules defined in Equations (17) and (18). The surrogate model used to determine the weight vector is a linear regression model of the form described in Equation (20). The data points corresponding to non-facial examples are ignored for the purpose of reweighting.

Preferably, the batch size for training convolution neural network 102 is chosen such as to include sufficient examples of data points including the protected characteristic and data points not including the protected characteristic.

Beneficially, training convolution neural network 102 according to the above described methodology reduces the effect of the protected characteristic on the trained model but does not require any modifications or changes to be made to the architecture of convolutional neural network 102. Therefore, the training method provides a simple means of removing potential bias within convolution neural network 102 by weighting the training data at each step of the iterative training process in order to mitigate the influence of the protected characteristic.

## Claims

1. A system for training a machine learning model, the system comprising:

   a data input unit configured to receive a training data set comprising a plurality of data points and a plurality of targets associated therewith, wherein a subset of the plurality of data points include a protected characteristic;
   a training unit operable to update a current model configuration of the machine learning model, the training unit comprising:

   a prediction unit configured to receive the training data set as input and output a plurality of predicted scores based on the current model configuration of the machine learning model; and
   an optimisation unit configured to receive the plurality of targets and the plurality of predicted scores, and subsequently determine an updated model configuration of the machine learning model; and

   a control unit configured to constrain operation of the training unit based at least in part on an estimated relationship between the plurality of predicted scores and the protected characteristic such that the influence of the protected characteristic in a subsequent model configuration of the machine learning model is substantially mitigated.

2. The system of claim 1 wherein the optimisation unit is configured to apply a first objective and the control unit is configured to apply a second objective operable to compete with the first objective in order to determine the subsequent model configuration of the machine learning model.

3. The system of claim 2 wherein the optimisation unit is configured to jointly optimise the first objective and the second objective thereby to determine the updated model configuration of the machine learning model, whereby optimising the second objective reduces the influence of the protected characteristic in the subsequent model configuration of the machine learning model.

4. The system of claim 2 or claim 3 wherein the second objective is based on the estimated relationship between the plurality of predicted scores and the protected characteristic.

5. The system of claim 4 wherein the estimated relationship is determined between a first group measure and a second group measure, whereby optimising the second objective minimises the difference between the first group measure and the second group measure thereby to reduce the influence of the protected characteristic in the subsequent model configuration of the machine learning model.

6. The system of claim 4 wherein the estimated relationship comprises a causal relationship between the plurality of predicted scores and the protected characteristic.

7. The system of claim 4 wherein the estimated relationship comprises an explicability score estimated by a surrogate machine learning model.

8. The system of claim 1 wherein the control unit is configured to weight the training data set based on the estimated relationship between the plurality of predicted scores and the protected characteristic, whereby the subsequent model configuration of the machine learning model is based on the weighted training data set.

9. The system of claim 8 wherein the control unit further comprises:

a surrogate machine learning model configured to receive the training data set and the plurality of predicted scores, and output the estimated relationship between the plurality of predicted scores and the protected characteristic, wherein the estimated relationship comprises an explicability score; and
a weighting unit configured to determine a weight vector based on the estimated relationship and subsequently apply the weight vector to the training data set, wherein the weight vector is configured to mitigate the influence of the protected characteristic in the subsequent configuration of the machine learning model.

10. The system of any preceding claim wherein optimising the first objective minimises the difference between the plurality of targets and a subsequent plurality of predicted scores produced by the subsequent configuration of the machine learning model.

11. A method for training a machine learning model, the method comprising:

receiving a training data set comprising a plurality of data points and a plurality of targets associated therewith, wherein a subset of the plurality of data points include a protected characteristic;
updating a current configuration of the machine learning model, the updating comprising the steps of:

predicting, using the training data set, a plurality of predicted scores based on the current configuration of the machine learning model; and
optimising the current configuration of the machine learning model based on the plurality of targets and the plurality of predicted scores thereby to determine an updated model configuration of the machine learning model; and

constraining the updating based on an estimated relationship between the plurality of predicted scores and the protected characteristic such that the influence of the protected characteristic in a subsequent model configuration of the machine learning model is substantially mitigated.

12. The method of claim 11 wherein optimising the current configuration of the machine learning model comprises the step of:

jointly optimising a first objective and a second objective thereby to determine the updated model configuration of the machine learning model, wherein the second objective is operable to compete with the first objective in order to determine the subsequent model configuration of the machine learning model.

13. The method of claim 12 wherein the second objective is based on a causal relationship determined between the plurality of predicted scores and the protected characteristic.

14. The method of claim 11 wherein constraining the updating comprises the steps of:

training a surrogate machine learning model on the plurality of data points and the plurality of predicted scores to predict the estimated relationship;
determining a weight vector based on the estimated relationship; and
weighting the training data set based on the weight vector whereby the subsequent model configuration of the machine learning model is based on the weighted training data set.

15. A computer readable medium comprising one or more programs, the one or more programs comprising instructions which when executed by one or more processors of an electronic device cause the electronic device to perform the methods of any one of claims 11 to 14.

Figure 1

Figure 2

300

306

$$p\left(A(\hat{y}_i) = 1 \mid x_i^{(k)} \in G\right)$$

302

304

308

$$p\left(A(\hat{y}_i) = 1 \mid x_i^{(k)} \notin G\right)$$

$x_i^{(k)} \in G$

$x_i^{(k)} \notin G$

**Figure 3**

Figure 4

**Figure 5**

EP 3 866 072 A1

**Figure 6**

EP 3 866 072 A1

Figure 7

806

802

808

812
SURROGATE
MODEL

816

814
WEIGHTING UNIT

810

804

**Figure 8**

$t - 1$          $t$          $t + 1$

```
                          902                    902
   ┌──────────┐    ┌──────────────┐      ┌──────────┐
   │   902    │    │   ┌────┐     │      │   902    │
··>│ TRAINING │───>│   │910 │     │ ───> │ TRAINING │
   │   UNIT   │    │   └────┘     │      │   UNIT   │
   └──────────┘    └──────┬───────┘      └──────────┘
 ┌──────┐                 │                   │
 │914-A │         ┌────┐  ▼                    ▼
 └──────┘         │914-B│ ┌──────────┐    ┌──────────┐
                  └────┘  │   906    │    │   904    │
                          │ SURROGATE│    │ CONTROL  │──>
   ┌──────────┐           │  MODEL   │    │   UNIT   │
   │   904    │           └────┬─────┘    └──────────┘
   │ CONTROL  │                │              ┌──────┐
   │   UNIT   │    ┌────┐      ▼              │914-D │
   └──────────┘    │912 │ ┌──────────┐       └──────┘
                   └────┘ │   908    │
                          │ WEIGHTING│
                          │   UNIT   │
                          └──────────┘
                  904          ┌──────┐
                               │914-C │
                               └──────┘
```

**Figure 9**

1000

1002
RECEIVE A TRAINING DATA SET

1004
UPDATE A CURRENT CONFIGURATION OF A MACHINE LEARNING MODEL

1006
PREDICT A PLURALITY OF PREDICTED SCORES BASED ON THE CURRENT CONFIGURATION

1008
OPTIMISE THE CURRENT CONFIGURATION

1010
CONSTRAIN THE UPDATING BASED ON AN ESTIMATED RELATIONSHIP BETWEEN THE PLURALITY OF PREDICTED SCORES AND THE PROTECTED CHARACTERISTIC

**Figure 10**

<u>1008</u>
OPTIMISE THE CURRENT CONFIGURATION

<u>1102</u>
APPLY A FIRST BALANCING TERM TO A
FIRST OBJECTIVE

<u>1104</u>
APPLY A SECOND BALANCING TERM
TO A SECOND OBJECTIVE

<u>1106</u>
JOINTLY OPTIMISE THE FIRST
OBJECTIVE AND THE SECOND
OBJECTIVE

**Figure 11**

1200

```
┌─────────────────────────────────────┐
│              1202                    │
│   ESTIMATING A PROBABILITY FOR       │
│   EACH DATA POINT IN THE TRAINING    │
│              DATA SET                │
└─────────────────────────────────────┘
```

```
┌──────────────────┐      ┌──────────────────┐
│       1204       │      │       1206       │
│  TRAINING A FIRST│      │  TRAINING A SECOND│
│      MODEL       │      │      MODEL       │
└──────────────────┘      └──────────────────┘
```

```
┌─────────────────────────────────────┐
│              1208                    │
│    DETERMINING A CAUSAL              │
│  RELATIONSHIP BASED ON THE FIRST     │
│  MODEL, THE SECOND MODEL, AND A      │
│         REFERENCE MODEL              │
└─────────────────────────────────────┘
```

**Figure 12**

1010
CONSTRAIN THE UPDATING BASED ON AN
ESTIMATED RELATIONSHIP BETWEEN THE
PLURALITY OF PREDICTED SCORES AND THE
PROTECTED CHARACTERISTIC

1302
TRAINING A SURROGATE MODEL TO
DETERMINE THE ESTIMATED
RELATIONSHIP

1304
DETERMINING A WEIGHT VECTOR
BASED ON THE ESTIMATED
RELATIONSHIP

1306
WEIGHTING THE TRAINING DATA
BASED ON THE WEIGHT VECTOR

**Figure 13**

1400

Figure 14

EP 3 866 072 A1

Europäisches
Patentamt

European
Patent Office

Office européen
des brevets

# EUROPEAN SEARCH REPORT

Application Number

EP 20 15 7023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/060581 A1 (EL MOUSSA FADI [GB] ET AL) 1 March 2018 (2018-03-01) * paragraph [0055] - paragraph [0123] * * figures 1-30 * | 1-15 | INV. G06N3/08 G06N20/10 |
| A | US 10 402 723 B1 (SILBERMAN GABRIEL M [US] ET AL) 3 September 2019 (2019-09-03) * column 23, line 53 - column 24, line 40 * | 2-5,12 | |
| A | US 2019/362417 A1 (PATTEN JR WILLIE R [US] ET AL) 28 November 2019 (2019-11-28) * paragraph [0054] * * figure 2 * | 7,9,14 | |

TECHNICAL FIELDS
SEARCHED (IPC)

G06N

The present search report has been drawn up for all claims

| Place of search | Date of completion of the search | Examiner |
|---|---|---|
| The Hague | 9 September 2020 | Baldan, Marco |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 15 7023

09-09-2020

| Patent document cited in search report | | Publication date | Patent family member(s) | | Publication date |
|---|---|---|---|---|---|
| US 2018060581 | A1 | 01-03-2018 | GB 2555176 | A | 25-04-2018 |
| | | | US 2018060581 | A1 | 01-03-2018 |
| US 10402723 | B1 | 03-09-2019 | US 10402723 | B1 | 03-09-2019 |
| | | | US 2020082261 | A1 | 12-03-2020 |
| | | | WO 2020056060 | A1 | 19-03-2020 |
| US 2019362417 | A1 | 28-11-2019 | NONE | | |

For more details about this annex : see Official Journal of the European Patent Office, No. 12/82